(19) **Europäisches Patentamt / European Patent Office / Office européen des brevets**

(11) **EP 4 633 064 A1**

(12) **EUROPEAN PATENT APPLICATION**
published in accordance with Art. 153(4) EPC

(43) Date of publication:
**15.10.2025 Bulletin 2025/42**

(21) Application number: **22967951.9**

(22) Date of filing: **09.12.2022**

(51) International Patent Classification (IPC):
$H04B\ 10/85^{(2013.01)}$   $H04B\ 10/70^{(2013.01)}$
$H04B\ 10/079^{(2013.01)}$   $H04W\ 12/04^{(2021.01)}$
$H04W\ 12/06^{(2021.01)}$

(52) Cooperative Patent Classification (CPC):
**H04B 10/079; H04B 10/70; H04B 10/85;
H04W 12/04; H04W 12/06**

(86) International application number:
**PCT/KR2022/020038**

(87) International publication number:
**WO 2024/122693 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.
Yeongdeungpo-gu
Seoul 07336 (KR)**

(72) Inventors:
• **AHN, Byungkyu
  Seoul 06772 (KR)**
• **LEE, Sangrim
  Seoul 06772 (KR)**
• **LEE, Hojae
  Seoul 06772 (KR)**
• **KIM, Jayeong
  Seoul 06772 (KR)**
• **LEE, Jonghyun
  Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **AUTHENTICATION METHOD USING PRE-SHARED SYMMETRIC KEY FOR LOCATION SELECTION OF AUTHENTICATION INFORMATION IN QUANTUM COMMUNICATION SYSTEM, AND APPARATUS THEREFOR**

(57)    The present disclosure provides a method of performing a user authentication in a quantum communication system. More specifically, the method includes transmitting, to the receiving end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; performing the user authentication with the receiving end based on a portion of the checking sequence determined from each of the at least one data block; and performing the QBER estimation with the receiving end based on i) a result of the user authentication and (ii) a remaining checking sequence excluding the portion of the checking sequence determined from each of the at least one data block. (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

【FIG. 34】

```
                    ( Start )
                        |
                        v
+----------------------------------------------------+
| Perform, with receiving end, random access         |
| procedure for establishing connection related to   |——S3410
| classical channel related to quantum channel for   |
| user authentication                                |
+----------------------------------------------------+
                        |
                        v
+----------------------------------------------------+
| Transmit information sequence including at least   |
| one data block to receiving end on quantum channel |——S3420
+----------------------------------------------------+
                        |
                        v
+----------------------------------------------------+
| Perform user authentication with receiving end     |
| based on portion of checking sequence determined   |——S3430
| from each of at least one data block               |
+----------------------------------------------------+
                        |
                        v
+----------------------------------------------------+
| Perform QBER estimation with receiving end based   |
| on (i) result of user authentication and (ii)      |
| remaining checking sequence excluding portion of   |——S3440
| checking sequence determined from each of at       |
| least one data block                               |
+----------------------------------------------------+
                        |
                        v
                    (  End  )
```

**Description**

[Technical Field]

The present disclosure relates to a quantum communication system, and more particularly to a method of performing authentication in a quantum communication system and a device therefor.

[Background Art]

Wireless communication systems are widely deployed to provide various types of communication services, such as voice and data. In general, the wireless communication system is a multiple access system capable of supporting communication with multiple users by sharing available system resources (bandwidth, transmission power, etc.). Examples of the multiple access system include a Code Division Multiple Access (CDMA) system, a Frequency Division Multiple Access (FDMA) system, a Time Division Multiple Access (TDMA) system, a Space Division Multiple Access (SDMA) system, an Orthogonal Frequency Division Multiple Access (OFDMA) system, a Single Carrier Frequency Division Multiple Access (SC-FDMA) system, and an Interleave Division Multiple Access (IDMA) system. In addition, research is ongoing on quantum communication, which is a next-generation communication technology that can overcome the limitations of existing information and communication, such as security and ultra-fast computation, by applying quantum mechanical properties to the information and communication field. The quantum communication provides a means to generate, transmit, process, and store information in the form of a superposition of 0 and 1, unlike the existing communication which is based on binary bit information. In the existing communication technologies, wavelengths, amplitudes, or the like have been used for information transmission between a transmitting end and a receiving end, but in the quantum communication, a photon, which is the smallest unit of light, is used for the information transmission between the transmitting end and the receiving end.

[Disclosure]

[Technical Problem]

An object of the present disclosure is to provide a method of performing user authentication in a quantum communication system and a device therefor.
Another object of the present disclosure is to provide a method of performing location-based user authentication using a pre-shared symmetric key shared between authorized transmitting and receiving entities in a quantum communication system and a device therefor.
Another object of the present disclosure is to provide a method of performing user authentication based on a user authentication code error rate between transmitting and receiving entities in a quantum communication system and a device therefor.
Another object of the present disclosure is to provide a method of simultaneously performing a user authentication process and a quantum bit error rate (QBER) estimation process in a quantum communication system and a device therefor.
The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

The present disclosure provides a method of performing user authentication in a quantum communication system and a device therefor.
More specifically, a method of performing, by a transmitting end, a user authentication in a quantum communication system according to the present disclosure comprises performing, with a receiving end, a random access procedure for establishing a connection related to a classical channel related to a quantum channel for the user authentication, wherein the random access procedure includes transmitting a random access preamble to the receiving end, receiving a random access response from the receiving end, transmitting a connection request message to the receiving end based on the random access response, and receiving a contention resolution message from the receiving end; transmitting, to the receiving end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; performing the user authentication with the receiving end based on a portion of the checking sequence determined from each of the at least one data block; and performing the QBER estimation with the receiving end based on i) a result of the user authentication and (ii) a remaining checking sequence excluding the portion of the checking sequence determined from each of the at least one data block, wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

Performing the user authentication may comprise transmitting, to the receiving end, a message for the user authentication generated based on the portion of the checking sequence determined from each of the at least one data block.

Performing the user authentication may further comprise transmitting, to the receiving end, information for a basis used to generate the message for the user authentication; and receiving, from the receiving end, measurement basis information for a basis that the receiving end uses to measure the transmitted message for the user authentication.

Performing the user authentication may further comprise determining, based on the measurement basis information, user authentication information related to a matching portion between the basis that the transmitting end uses to generate the message for the user authentication from the generated message for the user authentication and the basis that the receiving end uses to measure the message for the user authentication transmitted by the transmitting end; and receiving, from the receiving end, a user authentication measurement value related to the matching portion between the basis that the transmitting end uses to generate the message for the user authentication and the basis that the receiving end uses to measure the message for the user authentication transmitted by the transmitting end, among measurement values for the entire transmitted message for the user authentication of the receiving end. A success or a failure of the user authentication is determined based on the user authentication error rate calculated based on a difference between (i) a value of the user authentication information and (ii) the user authentication measurement value.

Performing the QBER estimation may comprise transmitting, to the receiving end, the remaining checking sequence excluding the portion of the checking sequence determined from each of the at least one data block.

Performing the QBER estimation may further comprise transmitting, to the receiving end, information for a basis used to generate the remaining checking sequence; and receiving, from the receiving end, measurement basis information for a basis that the receiving end uses to measure the transmitted remaining checking sequence.

Performing the QBER estimation may further comprise determining, based on the measurement basis information, checking sequence information related to a matching portion between the basis that the transmitting end uses to generate the remaining checking sequence from the generated remaining checking sequence and the basis that the receiving end uses to measure the remaining checking sequence transmitted by the transmitting end; and receiving, from the receiving end, a checking sequence measurement value related to the matching portion between the basis that the transmitting end uses to generate the remaining checking sequence and the basis that the receiving end uses to measure the remaining checking sequence transmitted by the transmitting end, among measurement values for the entire transmitted remaining checking sequence of the receiving end.

The at least one key generated based on the preshared key may be constructed by repeatedly concatenating the preshared key until a sum of (i) a length of the preshared key and (ii) a length of the at least one key generated based on the preshared key is equal to a length of the information sequence including the at least one data block.

The at least one key generated based on the preshared key may be constructed by repeatedly concatenating the preshared key until a sum of (i) a length of the preshared key and (ii) a length of the at least one key generated based on the preshared key is equal to a length of the information sequence including the at least one data block. The repeatedly concatenated preshared key may be shifted to the left or right each time the preshared key is repeatedly concatenated.

Each of the preshared key and the at least one key generated based on the preshared key may correspond one-to-one to the at least one data block.

A transmitting end performing a user authentication in a quantum communication system according to the present disclosure comprises a transmitter transmitting a radio signal; a receiver receiving the radio signal; at least one processor; and at least one computer memory operably connectable to the at least one processor and storing instructions performing operations based on being executed by the at least one processor. The operations comprise performing, with a receiving end, a random access procedure for establishing a connection related to a classical channel related to a quantum channel for the user authentication, wherein the random access procedure includes transmitting a random access preamble to the receiving end, receiving a random access response from the receiving end, transmitting a connection request message to the receiving end based on the random access response, and receiving a contention resolution message from the receiving end; transmitting, to the receiving end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; performing the user authentication with the receiving end based on a portion of the checking sequence determined from each of the at least one data block; and performing the QBER estimation with the receiving end based on i) a result of the user authentication and (ii) a remaining checking sequence excluding the portion of the checking sequence determined from each of the at least one data block, wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

A method of performing, by a receiving end, a user authentication in a quantum communication system according to the present disclosure comprises performing, with a transmitting end, a random access procedure for establishing a connection related to a classical channel related to a quantum channel for the user authentication, wherein the random access procedure includes receiving a random access preamble from the transmitting end, transmitting a random access response to the transmitting end, receiving a connection request message from the transmitting end based on the random access response, and transmitting a contention resolution message to the transmitting end; receiving, from the transmitting end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; performing the user authentication with the transmitting end based on a portion of the checking sequence determined from each of the at least one data block; and performing the QBER estimation with the receiving end based on i) a result of the user authentication and (ii) a remaining checking sequence excluding the portion of the checking sequence determined from each of the at least one data block, wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

A receiving end performing a user authentication in a quantum communication system according to the present disclosure comprises a transmitter transmitting a radio signal; a receiver receiving the radio signal; at least one processor; and at least one computer memory operably connectable to the at least one processor and storing instructions performing operations based on being executed by the at least one processor. The operations comprise performing, with a transmitting end, a random access procedure for establishing a connection related to a classical channel related to a quantum channel for the user authentication, wherein the random access procedure includes receiving a random access preamble from the transmitting end, transmitting a random access response to the transmitting end, receiving a connection request message from the transmitting end based on the random access response, and transmitting a contention resolution message to the transmitting end; receiving, from the transmitting end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; performing the user authentication with the transmitting end based on a portion of the checking sequence determined from each of the at least one data block; and performing the QBER estimation with the receiving end based on i) a result of the user authentication and (ii) a remaining checking sequence excluding the portion of the checking sequence determined from each of the at least one data block, wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

In a non-transitory computer readable medium (CRM) according to the present disclosure storing one or more instructions, one or more instructions executable by one or more processors allow a transmitting end to perform, with a receiving end, a random access procedure for establishing a connection related to a classical channel related to a quantum channel for the user authentication, wherein the random access procedure includes transmitting a random access preamble to the receiving end, receiving a random access response from the receiving end, transmitting a connection request message to the receiving end based on the random access response, and receiving a contention resolution message from the receiving end; transmit, to the receiving end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; perform the user authentication with the receiving end based on a portion of the checking sequence determined from each of the at least one data block; and perform the QBER estimation with the receiving end based on i) a result of the user authentication and (ii) a remaining checking sequence excluding the portion of the checking sequence determined from each of the at least one data block, wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

In a device according to the present disclosure including one or more memories and one or more processors operably connected to the one or more memories, the one or more processors allow the device to perform, with a receiving end, a random access procedure for establishing a connection related to a classical channel related to a quantum channel for the user authentication, wherein the random access procedure includes transmitting a random access preamble to the receiving end, receiving a random access response from the receiving end, transmitting a connection request message to the receiving end based on the random access response, and receiving a contention resolution message from the receiving end; transmit, to the receiving end, an information sequence including at least one data block on the quantum channel, wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block, wherein the preshared key is used to select a location of a sequence to be used for the user authentication among sequences included in a specific data block related to the user authentication among the at least one data block; perform the user authentication with the receiving end based on a portion of the checking sequence determined from each of the at least one data block; and perform the QBER estimation with the receiving end based on i) a result of the user authentication and (ii) a remaining checking sequence excluding the portion of the checking sequence determined from each of the at least one data block, wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

[Advantageous Effects]

The present disclosure has an effect of performing user authentication in a quantum communication system.

The present disclosure has an effect of performing user authentication using information transmitted on a quantum channel in a quantum communication system.

The present disclosure has an effect of ensuring security without assuming that transmitting and receiving ends of a classical channel and a quantum channel are identical, since user authentication is performed using information transmitted on the quantum channel in a quantum communication system.

The present disclosure has an effect that information used for user authentication can be used for QBER estimation in a quantum communication system.

The present disclosure has an effect of increasing a processing speed of a QBER estimation process in a quantum communication system.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.
FIG. 2 illustrates an example of a wireless apparatus applicable to the present disclosure.
FIG. 3 illustrates a method of processing a transmitted signal applicable to the present disclosure.

FIG. 4 illustrates another example of a wireless device applicable to the present disclosure.

FIG. 5 illustrates an example of a hand-held device applicable to the present disclosure.

FIG. 6 illustrates physical channels applicable to the present disclosure and a signal transmission method using the same.

FIG. 7 illustrates the structure of a radio frame applicable to the present disclosure.

FIG. 8 illustrates a slot structure applicable to the present disclosure.

FIG. 9 illustrates an example of a communication structure providable in a 6G system applicable to the present disclosure.

FIG. 10 illustrates an example of a structure of a quantum communication system.

FIG. 11 illustrates an example of a third-party attack that may occur in quantum communication.

FIG. 12 illustrates an example of a MAC based authentication scheme. FIG. 13 illustrates an example of an authentication method based on Wegman & Carter Authentication (WCA).

FIG. 14 illustrates an example of a user authentication process via a classical channel.

FIG. 15 illustrates an example of a user authentication process applying a method of using a pre-shared symmetric key described in the present disclosure to select a location of authentication information.

FIG. 16 illustrates an example of a user authentication process in which a method described in the present disclosure is applied for an authentication process when there is an eavesdropper in a receiver.

FIG. 17 illustrates an example of generating an authentication code from a pre-shared symmetric key in a user authentication process applying a method described in the present disclosure.

FIG. 18 illustrates an example of a process of performing authentication by estimating an error rate from an authentication code generated by a transmitter and a receiver of quantum communication.

FIG. 19 is a flowchart illustrating an example of performing a user authentication method described in the present disclosure.

FIG. 20 illustrates an example of information used for authentication and QBER estimation in a method described in the present disclosure.

FIG. 21 illustrates a process of selecting information to be used for authentication and QBER estimation among quantum state string information transmitted on a quantum channel described in the present disclosure.

FIG. 22 illustrates an overall flowchart of an authentication scheme and a QBER estimation process that uses a pre-shared key described in the present disclosure for location selection of authentication information.

FIG. 23 illustrates an example of a method of configuring a quantum data block described in the present disclosure.

FIG. 24 illustrates an example of performing a QBER estimation method described in the present disclosure.

FIG. 25 illustrates an example of performing an authentication method described in the present disclosure.

FIG. 26 illustrates an example of performing a user authentication method described in the present disclosure.

FIG. 27 illustrates an example of performing a QBER estimation method described in the present disclosure.

FIG. 28 illustrates an example of applying a user authentication method described in the present disclosure to a QKD method.

FIG. 29 illustrates an example of applying a user authentication method described in the present disclosure to DL04 QSDC quantum communication protocol for securely transmitting classical information through a quantum channel based on single photons.

FIG. 30 illustrates an example of performing a user authentication process where a pre-shared symmetric key is applied to both location selection and basis selection.

FIGS. 31 to 33 illustrate a minimum length of a pre-shared symmetric key required to ensure security per security strength.

FIG. 34 is a flowchart illustrating an example in which a user authentication method described in the present disclosure is performed by a transmitting end.

FIG. 35 is a flowchart illustrating an example in which a user authentication method described in the present disclosure is performed by a receiving end.

[Mode for Disclosure]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation(5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

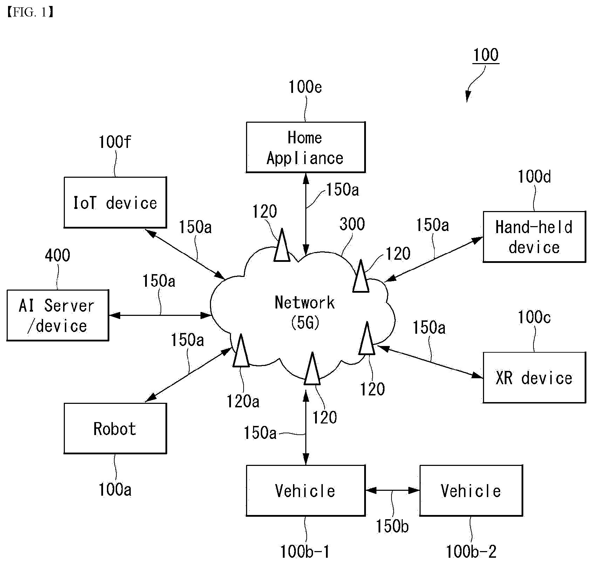

FIG. 1 illustrates an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

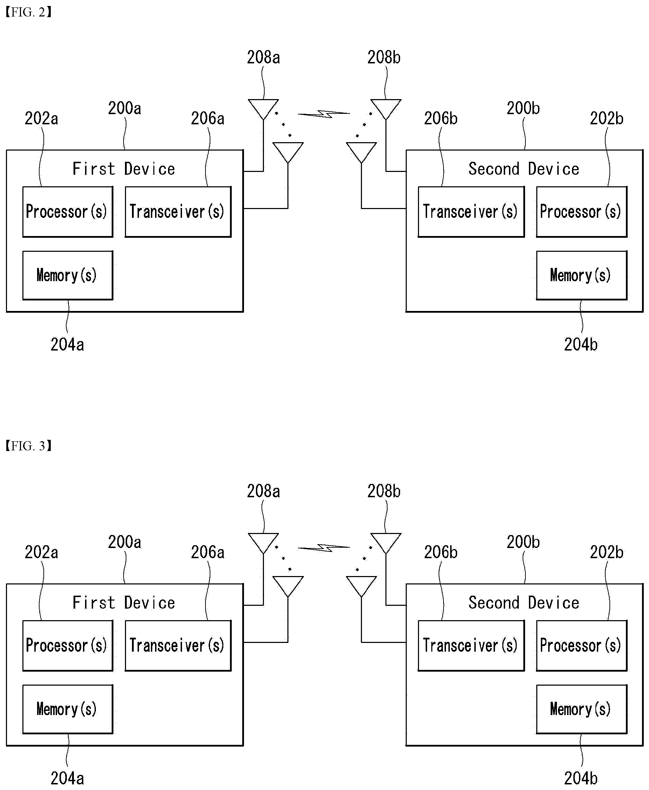

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

FIG. 3 illustrates a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. For example, blocks 1010 to 1060 may be implemented in the processors 202a and 202b of FIG. 2. In addition, blocks 310 to 350 may be implemented in the processors 202a and 202b of FIG. 2 and a block 360 may be implemented in the transceivers 206a and 206b of FIG. 2, without being limited to the above-described embodiments.

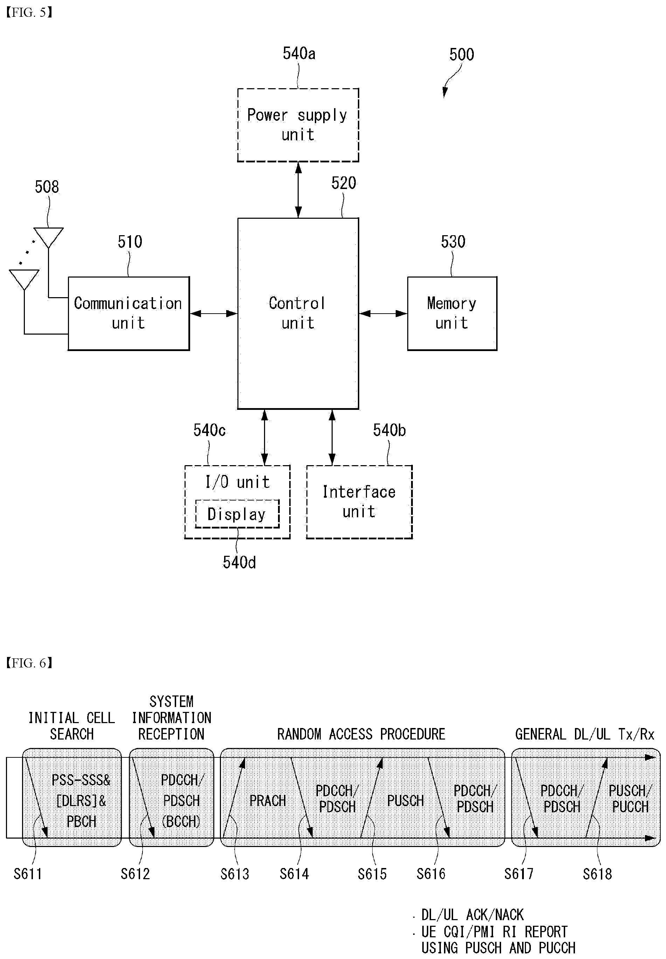

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a descrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

## Structure of wireless device applicable to the present disclosure

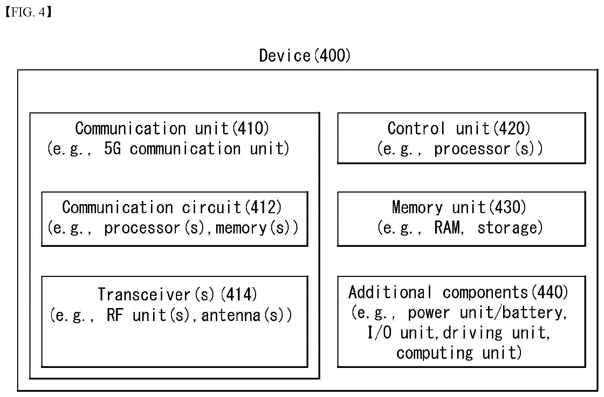

FIG. 4 illustrates another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 300 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 420 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a non-volatile memory and/or a combination thereof.

## Hand-held device applicable to the present disclosure

FIG. 5 illustrates an example of a hand-held device applicable to the present disclosure.

FIG. 5 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 400 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 400. In addition, the memory unit 530 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 540c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

## Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 6 illustrates physical channels applicable to the present disclosure and a signal transmission method using the same.

The UE which is turned on again in a state of being turned off or has newly entered a cell performs initial cell search operation in step S611 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. The UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/-downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

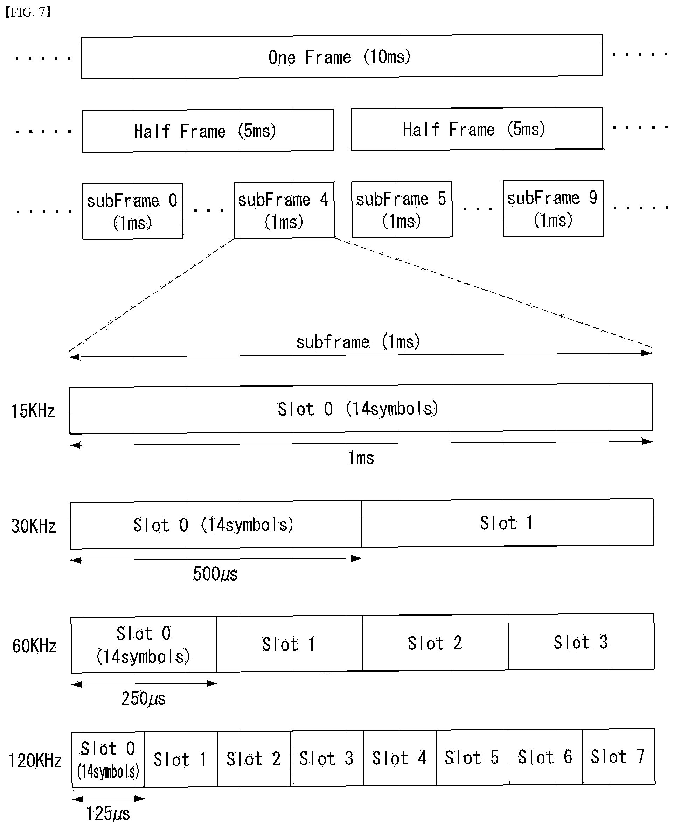

FIG. 7 illustrates the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 2]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Tables 1 and 2 above, $N_{symb}^{slot}$ may indicate the number of symbols in a slot, $N_{slot}^{frame,\mu}$ may indicate the number of slots in a frame, and $N_{slot}^{subframe,\mu}$ may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

[Table 3]

| Frequency Range designation | Corresponding frequency range | Subcarrier Spacing |
|---|---|---|
| FR1 | 410MHz - 7125MHz | 15, 30, 60kHz |
| FR2 | 242506MHz - 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments.

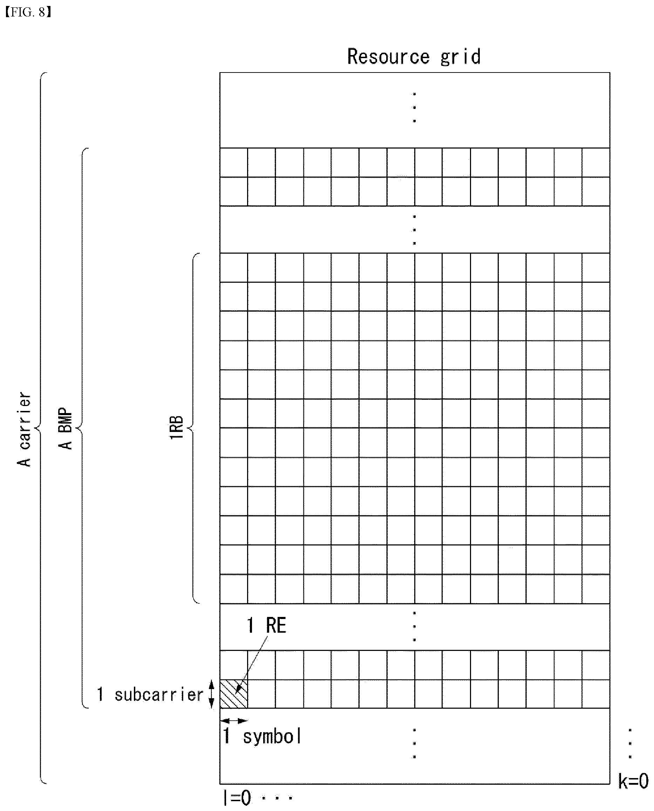

FIG. 8 illustrates a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

## 6G Communication System

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table 4]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

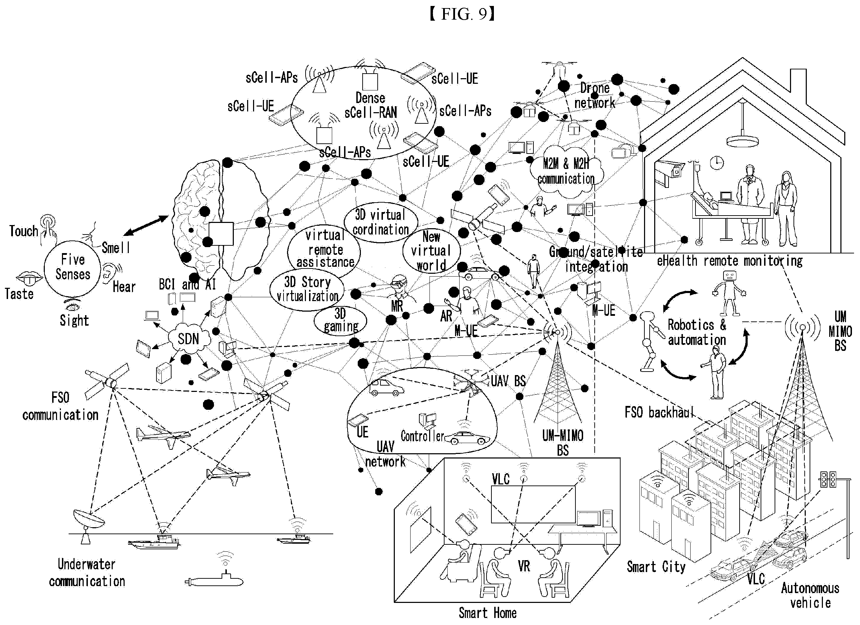

FIG. 9 illustrates an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.

- Radar technology integrated with mobile technology: High-precision localization (or location-based service) through communication is one of the functions of the 6G wireless communication system. Accordingly, the radar system will be integrated with the 6G network.

- Softwarization and virtualization: Softwarization and virtualization are two important functions which are the bases of a design process in a 5GB network in order to ensure flexibility, reconfigurability and programmability.

## Quantum Communication

Quantum communication is a next-generation communication technology that can overcome the limitations of existing information and communication, such as security and ultra-fast computation, by applying quantum mechanical properties to the information and communication field. The quantum communication provides a means to generate, transmit, process, and store information in the form that cannot be expressed or is difficult to express in the form of 0 and 1 according to binary bit information used in existing communication technologies. In the existing communication technologies, wavelengths, amplitudes, or the like have been used for information transmission between a transmitting end and a receiving end, but in the quantum communication, a photon, which is the smallest unit of light, is used for the information transmission between the transmitting end and the receiving end. In particular, the quantum communication can utilize quantum uncertainty, quantum irreversibility, and non-cloning for the polarization or phase difference of photons (light), and thus the quantum communication has the characteristic of enabling communication with perfect security. The quantum communication can also enable ultra-fast communication using quantum entanglement under certain conditions.

The present disclosure provides a method and device for user authentication, which is a process of verifying that entities exchanging information through a quantum channel are pre-authorized entities in a quantum communication system. More specifically, the present disclosure provides a method and device for using a pre-shared symmetric key between a transmitting end and a receiving end to determine which information among initial quantum information will be used as an authentication message for user authentication.

To help understanding of a method described in the present disclosure, the general contents of user authentication is first described below.

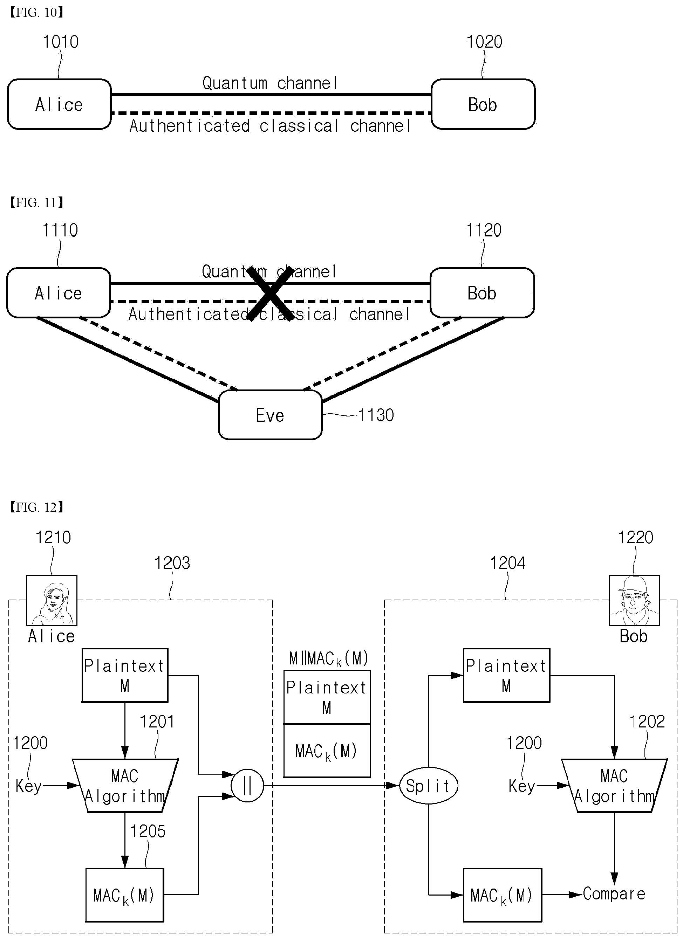

FIG. 10 illustrates an example of a structure of a quantum communication system.

As illustrated in FIG. 10, quantum communication techniques, such as quantum key distribution (QKD) and quantum secure direct communication (QSDC), transmit information between a transmitter and a receiver 1010/1020 by using a quantum channel that converts a secret key or classical message information into quantum state information and then transmits it, and a classical channel that transmits post-processing information of the transmitted information.

The QKD protocol, which is the most widely known among the quantum communication techniques, can theoretically guarantee the absolute security of a secret key shared on a quantum channel through the non-cloning theorem, which is a quantum mechanical property. That is, if a third party attempts to eavesdrop on message information transmitted on the quantum channel through a quantum bit error rate (QBER) estimation process using a part of information transmitted on the quantum channel, an error rate above a predetermined rate may occur. Hence, this can determine whether to eavesdrop, and thus the security of a message transmitted can be guaranteed. Through this, if the transmitter and the receiver are pre-arranged transmitter and receiver, the transmitted information can be safely transmitted without eavesdropping.

However, in order to guarantee unconditional security in the quantum communication technique such as the QKD, an additional process is necessary to verify whether an entity that safely transmits pre-assumed information is an entity that is promised to exchange information. This process is called user authentication. The user authentication first verifies whether transmitting and receiving entities are the originally intended entities by using information and algorithms pre-agreed between a transmitter and a receiver, and performs an act of exchanging information between the transmitter and the receiver only if authentication is passed.

As illustrated in FIG. 11 that illustrates an example of a man-in-the-middle (MITM) attack that may occur in quantum communication, if a third party Eve 1130 exists between Alice 1110 which is a transmitting end and Bob 1120 which is a receiving end, and attempts a man-in-the-middle attack where Eve 1130 acts as a receiving end to Alice 1110 and acts as a transmitting end to Bob 1120, a QBER estimation result through information transmission between Alice 1110 and Eve 1130 and a QBER estimation result through information transmission between Eve 1130 and Bob 1120 cannot check whether the third party Eve 1130 has performed the man-in-the-middle attack. That is, the third party, Eve, 1130 may receive information transmitted by Alice 1110 through the quantum channel, and at the same time transmits information randomly generated by Eve 1130 to Bob 1120. Therefore, a QBER estimation process through individual checking sequence transmission between Alice 1110 and Eve 1130 and between Eve 1130 and Bob 1120 cannot determine whether there is an eavesdropper. Through the man-in-the-middle attack, the third party Eve 1130 can know the contents of all data transmitted while relaying data between Alice 1110 and Bob 1120 and can also attempt to falsify/modify the data. Therefore, a user authentication process is required to verify that the transmitting end and the receiving end, which are the entities exchanging information, are authorized users, in order to prevent the man-in-the-middle attack.

Existing authentication schemes may be divided into a hash function-based authentication scheme including cryptographically strong elements and an authentication scheme based on information-theoretic security. In the hash function-based authentication scheme, the collision probability of hash functions is used as an authentication technology based on computational complexity, and an SHA scheme is a representative hash function-based technology. However, since the hash function-based authentication scheme are based on the computational complexity, they are likely to face security threats in the future due to the emergence of quantum computers. In addition, in a quantum cryptography communication system, an authentication scheme that uses a keyed hash function family that combines a symmetric key and a hash function based on information-theoretic security is applied and used to strengthen security, and quantum communication standard organizations such as the European Telecommunications Standards Institute (ETSI) have been adopted a method that uses a keyed hash function family as a standard authentication method. The above method uses a hash function called Strongly Universal Hashing as a message authentication code (MAC) algorithm to generate a message authentication code (MAC) to be used in the authentication process, and additionally uses a symmetric key used as a one-time pad (OTP) during the generation process. Since it is very unlikely that information can be recovered through the reverse process from the MAC if the symmetric key information is not known, it is known to have the highest level of security.

The MAC series authentication schemes are being currently applied as a standard authentication method for quantum information transmission methods such as QKD. FIG. 12 illustrates an example of a MAC based authentication scheme.

A MAC is used to verify the integrity of a message, and is an authentication scheme based on the fact that it is difficult for a third party who does not know one-time symmetric key information pre-shared between a transmitting end 1210 and a receiving end 1220 to know which MAC algorithm was used when generating the MAC. First, before an authentication process is performed, the transmitting end 1210 and the receiving end 1220 share the same symmetric key information 1200 and MAC algorithms 1201 and 1203. Thereafter, when the transmitting end 1210 inputs a plaintext message to be used for authentication into the MAC algorithm 1201, which of the MAC algorithms to be used is selected from a value of the pre-shared key 1200. Next, when a plaintext message 1203 is input to the MAC algorithm 1201 selected by the transmitting end 1210, a MAC 1205 is obtained as its output value, and the transmitting end 1210 transmits the plaintext message 1203 and the MAC 1205 generated by the transmitting end 1210 through a classical channel in order to generate a MAC at the receiving end 1220. The receiving end 1220 inputs a received plaintext message 1204 into a MAC algorithm 1202 of the receiving end 1220. In this instance, since the receiving end 1220 has the same pre-shared key as the transmitting end 1210, the receiving end 1220 can generate the MAC using the same MAC algorithm 1202 as the transmitting end 1210. Finally, the receiving end 1220 compares whether the MAC 1205 transmitted by the transmitting end 1210 and the MAC generated by the receiving end 1220 match each other. If the value of the MAC 1205 transmitted by the transmitting end 1210 matches the value of the MAC generated by the receiving end 1220, authentication is passed/successful, if the two values do not match, authentication fails.

In the case of the authentication method using the MAC, the pre-shared symmetric key information is not information transmitted through the classical channel, but is information included in only the pre-arranged transmitting and receiving ends. Therefore, even if the third party who does not know the pre-shared symmetric key information obtains message information, the third party, who has not obtained the symmetric key information, cannot know which MAC algorithm has been applied from the message information obtained by the third party, and thus security can be guaranteed. Accordingly, it can be understood that the security of the authentication method using the MAC is higher as the number of methods of configuring the MAC algorithm increases.

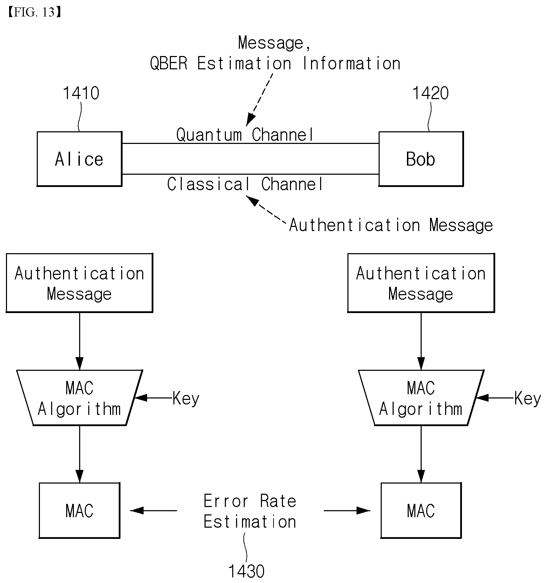

In a quantum key distribution (QKD) protocol that is currently applied as a security technology for 4G LTE/5G, the WCA scheme proposed by Wegman and Carter is adopted and used as a standard authentication technology, and a method is used to generate a tag with the MAC to be used for authentication using a symmetric key generated in the form of a one-time pad and a Strongly Universal Hash class. FIG. 13 illustrates an example of an authentication scheme based on Wegman & Carter Authentication (WCA).

The authentication method of FIG. 13 can be applied to both user authentication for checking whether a sender and a receiver have changed during message transmission, and message authentication for checking whether the content and order of message information have changed. In FIG. 13, a transmitting end 1310 uses a pre-shared key 1300 and a MAC algorithm 1301 to generate tag information 1305 acting as a MAC from message information 1303, and a hash function of the Strongly Universal Hash class is used as the MAC algorithm. In this instance, the pre-shared key information 1300 plays a role in selecting which hash function $h_k$ to use in H (1301 and 1302) of the transmitting end 1310 and a receiving end 1320, and a length of the pre-shared key is allocated as $\log_2|H|$ bits, where $|H|$ denotes the number of hash functions constructing a hash function set. The tag information 1305 is expressed as $T = h_k(m)$, and a message m of the authentication process is obtained from a result obtained after passing through a hash function $h_k$ selected from a pre-shared key as an input value. Thereafter, the receiving end 1320 uses the message 1303 received by the receiving end 1320 to compare tag information 1306 of the receiving end 1320 obtained from the pre-shared key 1300 and the hash function 1302 of the receiving end 1320 with the tag information 1305 received from the transmitting end 1310, and determines whether authentication (1208) is performed after checking whether the two tag information match.

As mentioned above, the Wegman & Carter authentication scheme uses the hash function as the MAC algorithm. The hash function is a function that receives information with arbitrary length and outputs the information as a hash value of fixed length. It is also called a message digest because the original length of the sentence is reduced to a certain length.

The hash function may be used as the MAC in the authentication process based on the following three properties.

One-wayness: For a given arbitrary output value y, it is computationally infeasible to find an input value x satisfying $y = h(x)$.

Second preimage resistance: There is $h(x)$ for a given input value x, and when $h(x)=h(x')$, it is computationally infeasible to find another input value x' satisfying $x=/x'$.

Collision resistance): It is computationally infeasible to find the two input values x and x' satisfying hash values $h(x) = h(x')$.

### Definition of terms

For convenience of explanation, the following symbols/abbreviations/terms may be used interchangeably in the present disclosure.

- QDC: Quantum Direct Communication
- QSDC: Quantum Secure Direct Communication
- QBER: Quantum Bit Error Rate
- QKD: Quantum Key Distribution
- MIMA: Man-in-middle-attack
- MAC: Message Authentication Code
- WCA: Wegman-Carter Authentication
- OTP: One Time Pad
- ITS: Information Theoretically Secure

The user authentication method described in the present disclosure can solve the following problems.

(1) The present disclosure can solve a problem that an existing authentication scheme for quantum communication using a classical channel requires an ideal assumption that the classical channel and quantum channel are always connected to the same user.
More specifically, in quantum communication, the quantum channel is used to transmit a secret key or a message, and the classical channel is used to exchange additional information required for additional post-processing procedures such as error correction. Therefore, although user authentication connected to a quantum channel used to transmit actual information is the most important in terms of security, information for authentication is exchanged between the transmitter and receiver on the classical channel when performing user authentication in the existing user authentication technology. This authentication method may be effective based on the assumption that the users connected through the quantum channel and the classical channel are always the same. However, if a third party attempts a man-in-the-middle attack on only the quantum channel, the presence of the man-in-the-middle attack cannot be determined through the existing user authentication method using the classical channel. Therefore, the application of a user authentication scheme using the quantum channel is absolutely necessary.
(2) The present disclosure can solve a problem that authentication information for user authentication and information for QBER estimation shall be separately generated, since a QBER estimation process and a user authentication process are separately performed in the existing quantum communication user authentication scheme.

More specifically, the QBER estimation is a method to secure security against an attack method in which an eavesdropper intercepts information on a quantum channel where a transmitter and a receiver are connected to each other, measures the information, and retransmits quantum information corresponding to a measurement result to the receiver. On the other hand, the authentication process is a method to secure security against an attack method in which the eavesdropper exchanges individual information with both the transmitter and the receiver.

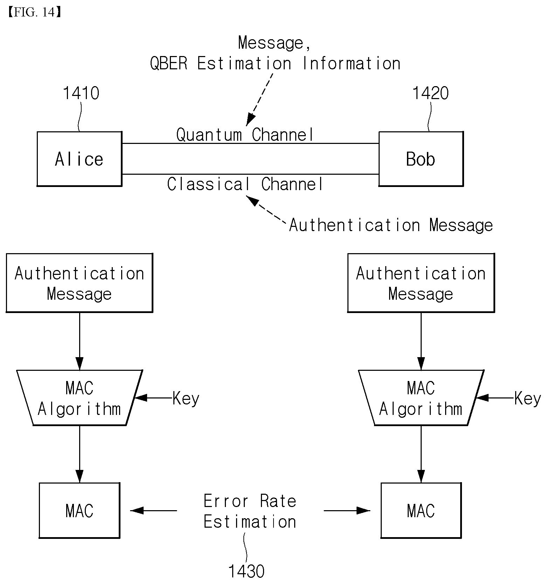

FIG. 14 illustrates an example of a user authentication process via a classical channel.

As illustrated in FIG. 14, in the existing quantum communication scheme, generally, information for user authentication is first transmitted on a classical channel in order to check whether transmitting and receiving entities 1410/1420 are pre-authorized entities. Thereafter, when the authentication of the communication entities 1410/1420 is completed, the communication entities 1410/1420 check, through QBER estimation information called a QBER checking sequence, whether there is an eavesdropping on information when the information is transmitted and received on a quantum channel between the authorized entities. The user authentication is performed by exchanging authentication messages between the communication entities 1410/1420 and based on an error rate between the authentication messages (1430). As above, in the existing quantum communication scheme, the user authentication process and the QBER estimation process are performed as separate processes after generating additional information required for the above two processes in addition to the transmission message.

Quantum communication technology is a technology that guarantees unconditional safety. To this end, it is important to guarantee the safety of information transmitted on a quantum channel through quantum mechanical properties, and research and development have been mainly conducted on this. User authentication of transmitting and receiving entities that perform quantum communication is just as important as guaranteeing the safety of information transmitted on the quantum channel through the quantum mechanical properties. Even if the presence of an eavesdropper is identified and information is safely transmitted through the quantum mechanical properties such as non-Cloning theorem, if transmitting and receiving entities are not pre-authorized users, the safety of the transmitted information cannot be guaranteed separately from the safety of the quantum channel.

The present disclosure provides a user authentication scheme for verifying whether transmitting and receiving entities connected on a quantum channel in quantum communication are pre-authorized users. More specifically, a method described in the present disclosure relates to a method of using a preshared key used in the user authentication process to select a location of transmission information (authentication information) to be used for authentication.

When the method described in the present disclosure is applied to the user authentication, if a third party not having a preshared key attempts a man-in-the-middle attack in which he/she acts as if he/she is a transmitter or a receiver, measurement location mismatch may occur at a certain rate in the measurement of the third party. The method described in the present disclosure utilizes the fact that an error rate resulting from the measurement location mismatch is/must be greater than an error rate resulting from environmental factors. In addition, in the method described in the present disclosure, since the user authentication process and the QBER estimation process are performed based on the error rate, the two processes may be performed simultaneously.

For the purpose of user authentication of quantum communication, a method of using a preshared key/preshared symmetric key to select a location actually used for authentication within the entire authentication message generated is first described.

## User authentication method of using pre-shared symmetric key for location selection

The user authentication method described in the present disclosure is a method of using a preshared key to select a location to be used for authentication and verifying whether transmitting and receiving entities are authorized entities by estimating an error rate through comparison of measurement values at the selected location. That is, according to the user authentication method proposed in the present disclosure, the preshared key is used to select a location for selecting information (information bits) actually used for authentication within all authentication messages generated by a transmitting end, and the transmitting and receiving ends can verify whether the transmitting and receiving entities are authorized entities by estimating an error rate through a comparison of only measurement values for the information locations selected by the preshared key within all the authentication messages.

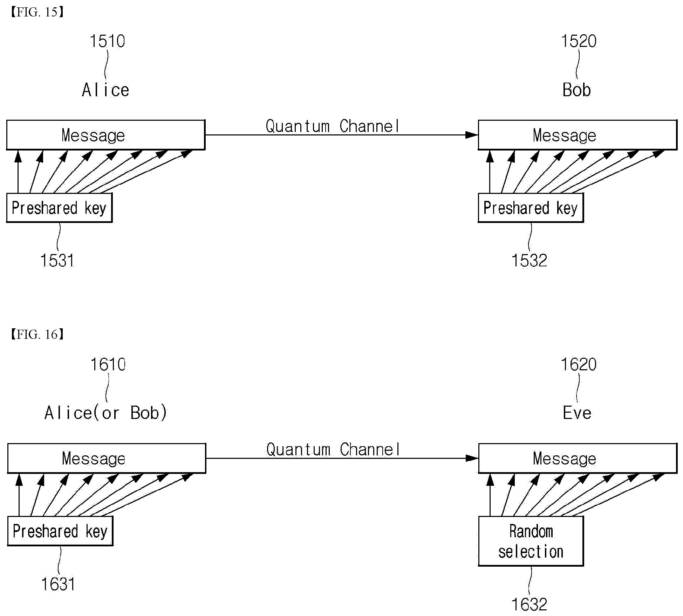

FIG. 15 illustrates an example of a user authentication process applying a method of using a pre-shared symmetric key described in the present disclosure to select a location of authentication information.

More specifically, FIG. 15 illustrates a user authentication process via a quantum channel between authorized transmitter (Alice) 1510 and receiver (Bob) 1520. Referring to FIG. 15, since authorized users 1510 and 1520 have the same preshared keys 1531 and 1532, the authorized users 1510 and 1520 may determine that which location among authentication message information transmitted on the quantum channel is selected and measured based on values of the preshared keys. As above, since the individual users each can equally select the location of the message information to be used for authentication based on the value of the preshared key, no error occurs in the authentication process, except for an influence of environmental noise such as a channel error.

FIG. 16 illustrates an example of a user authentication process in which a method described in the present disclosure is applied for an authentication process when there is an eavesdropper in a receiver.

More specifically, FIG. 16 illustrates a user authentication process via a quantum channel between an authorized transmitter (Alice) 1610 and Eve 1620 performing a man-in-the-middle attack not an authorized user. Since Eve 1620 performing the man-in-the-middle attack does not have a preshared key, Eve 1620 has no choice but to randomly select a location to be used for authentication among locations of authentication messages transmitted by the transmitter (Alice) 1610. In this instance, if information on the location to be used for authentication does not match between the transmitter and a receiver (1610/1620), a mismatch (error) occurs with a 50% probability at a specific k-th location among the information to be used for authentication between the transmitter and the receiver. That is, when information corresponding to the specific k-th location among all authentication information has a value of either classical information '0' or '1', and a third party who does not know a location of the information used for authentication processes information having a value of classical information '0' or '1' measured at a random location (j-th location) within the authentication message as the information corresponding to the specific k-th location, the probability that the information corresponding to the specific k-th location and the information measured at the j-th location match is 50%. Therefore, if the information on the location to be used for authentication does not match between the transmitter and the receiver (1610/1620), the mismatch (error) will occur with a 50% probability at the specific k-th location among the information to be used for authentication between the transmitter and the receiver. As above, the method described in the present disclosure determines whether authentication passes or fails based on an error rate that occurs during authentication based on that the probability of error (50%) when a receiver, which does not know the authentication location information, measures an authentication message is much higher than an error rate due to environmental errors (a maximum acceptable error rate limit considering an error correction is 11%).

A detailed procedure for using a preshared key to select a location of an authentication message in a user authentication process is as follows.

(1) Alice (transmitter) and Bob (receiver) share a preshared key to be used for user authentication before a quantum communication procedure starts. In this instance, a length of the preshared key is determined based on a security strength standard, and a method of setting the length of the preshared key based on the security strength standard is described in the contents related to a security analysis below.

(2) Alice (transmitter) transmits, to Bob (receiver), sequence information including (i) an authentication message, (ii) a message to be transmitted (information message), and (iii) information for QBER estimation via a quantum channel. In this instance, a location of the authentication message may be fixed location information pre-agreed between the transmitter (Alice) and the receiver (Bob). The location of the authentication message does not refer to a location of information actually used for authentication within the authentication message selected using the preshared key, but rather refers to the location of the authentication message within the sequence information including (i) the authentication message, (ii) the message to be transmitted (information message), and (iii) the information for QBER estimation.

(3) Bob (receiver) selects the authentication message from the received sequence information based on the pre-agreed location in the (2).

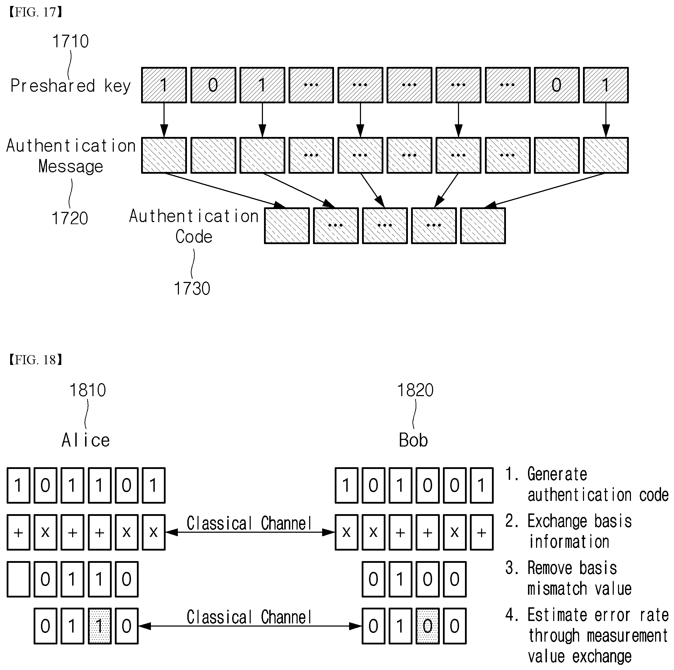

(4) Alice/Bob (transmitter/receiver) each select which location among an authentication message 1720 to use for user authentication, as illustrated in FIG. 17, using a preshared key 1710 of the same length as the authentication message. FIG. 17 illustrates an example of generating an authentication code from a pre-shared symmetric key in a user authentication process applying a method described in the present disclosure.

In this instance, since the preshared key is true random information, the preshared key is binary string information in which half of the information is 1 and the other half is 0. Therefore, a value of an authentication message corresponding to a location where the preshared key has 1 is output as code information for authentication (1730). Although not illustrated in FIG. 17, Bob (receiver) transmits an authentication code generated by Bob (receiver) to Alice (transmitter) through a classical channel, and Alice (transmitter) estimates an error rate by comparing an authentication code generated by Alice (transmitter) with the authentication code received from Bob (receiver).

The error rate estimation process is described with reference to FIG. 18. FIG. 18 illustrates an example of error rate estimation between authentication codes in a user authentication process in quantum communication.

Referring to FIG. 18, a transmitter 1810 and a receiver 1820 generate an authentication code based on an authentication message and a preshared key (1.). Next, the transmitter 1810 and the receiver 1820 perform a basis information exchange process via a classical channel (2.). Through the basis information exchange process, only a portion where the authentication message/authentication code is generated/measured using the same basis at a specific information location may remain in all the authentication messages/authentication codes respectively generated by the transmitter 1810 and the receiver 1820, and information portions using other bases may be removed (3.). Through the basis information exchange process, the portions of the authentication messages/authentication codes where the bases do not match are removed to generate a final authentication code to be used for authentication. The receiver 1820 transmits the generated final authentication code to the transmitter 1810 via the classical channel, and then an error rate is estimated through a comparison between the final authentication codes of the transmitter 1810 and the receiver 1820 (4.). In this instance, if the transmitter 1810 and the receiver 1820 are pre-authorized users, the two users would have selected the authentication message using the same preshared key. Therefore, no error greater than or equal to an environmental error rate, such as a channel error, occurs, and user authentication is successful. On the other hand, if one of the transmitter and the receiver is not an authorized user due to a man-in-the-middle attack, a man-in-the-middle attacker does not have the preshared key. Therefore, if the authentication message selection locations are different, an average of 50% of errors cannot be avoided, and user authentication fails. If an error rate of the authentication information is determined to be less than or equal to a QBER threshold (the maximum allowable rate of errors occurring environmentally), the authentication passes and then a quantum communication process continues. On the other hand, if the authentication error rate exceeds the QBER threshold, the authentication fails, the quantum communication process is interrupted, and the quantum channel is re-configured.

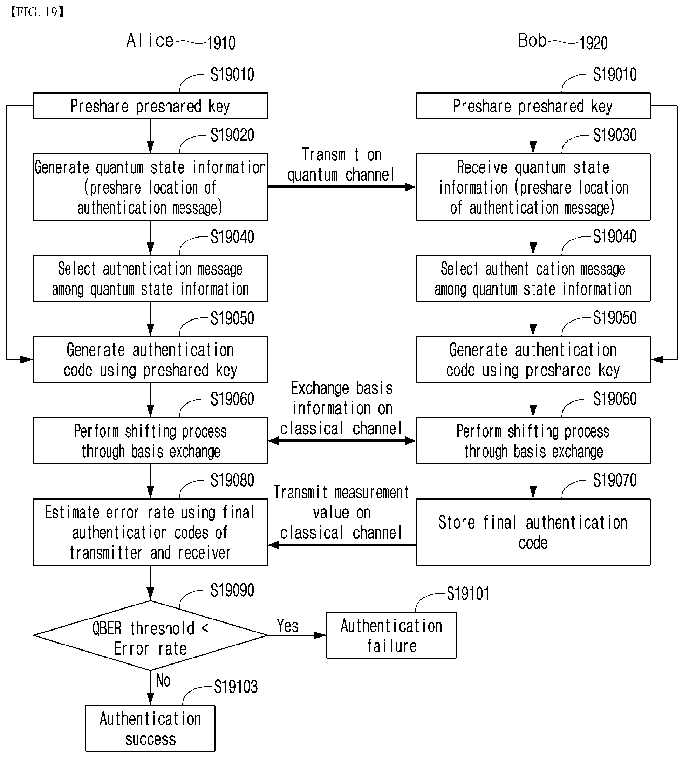

FIG. 19 is a flowchart illustrating an example of performing a user authentication method described in the present disclosure.

First, a preshared symmetric key is shared between a transmitter 1910 and a receiver 1920 (S19010). Thereafter, the transmitter 1910 generates quantum state information and transmits the quantum state information to the receiver 1920 through a quantum channel, and the receiver 1920 receives the quantum state information (S19020 and S19030). The quantum state information may be sequence information including (i) an authentication message, (ii) a message to be transmitted (information message), and (iii) information for QBER estimation. In the quantum state information, the authentication message may be included in a pre-agreed location between the transmitter 1910 and the receiver 1920. Next, the transmitter 1910 and the receiver 1920 select the authentication message from the quantum state information based on the pre-agreed location (S19040) and generate an authentication code using the preshared key (S19050).

Next, the transmitter 1910 and the receiver 1920 perform a basis information exchange process via a classical channel (S19060). Through the basis information exchange process, only a portion where the authentication message/authentication code is generated/measured using the same basis at a specific information location may remain in all the authentication messages/authentication codes respectively generated by the transmitter 1910 and the receiver 1920, and information portions using other bases may be removed (S19060). The information removal process may be referred to as sifting. Next, the receiver 1920 removes the portions of the authentication messages/authentication codes where the bases do not match through the basis information exchange process to generate a final authentication code to be used for authentication, and transmits the final authentication code to the transmitter 1910 via the classical channel (S19070). After the receiver 1920 transmits the final authentication code to the transmitter 1910 through the classical channel, the transmitter 1910 estimates an error rate by comparing the final authentication code received from the receiver 1920 with the final authentication code generated by the transmitter 1910 (S19080). The error rate estimation process is performed based on whether a QBER threshold is greater than an error rate obtained through the comparison between the authentication codes (S19090). In this instance, if the transmitter 1910 and the receiver 1920 are pre-authorized users, the two users would have selected the authentication message using the same preshared key. Therefore, no error greater than or equal to an environmental error rate, such as a channel error, occurs, and user authentication is successful (S19103). On the other hand, if one of the transmitter and the receiver is not an authorized user due to a man-in-the-middle attack, a man-in-the-middle attacker does not have the preshared key. Therefore, if the authentication message selection locations are different, an average of 50% of errors cannot be avoided, and user authentication fails (S19101). Although not illustrated in FIG. 19, if an error rate of the authentication information is determined to be less than or equal to a QBER threshold (the maximum allowable rate of errors occurring environmentally), the authentication passes and then a quantum communication process continues. On the other hand, if the authentication error rate exceeds the QBER threshold, the authentication fails, the quantum communication process is interrupted, and the quantum channel is re-configured.

A method of simultaneously performing a user authentication process and a QBER estimation process is described below.

## Method of simultaneously performing user authentication and QBER estimation processes in a user authentication scheme using a preshared symmetric key for location selection

A user authentication process and a QBER estimation process are the two most important factors required to ensure the security of a communication subject and a quantum channel from a pre-unauthorized third party (Eve) in quantum secure communication. In existing quantum communication protocols such as QKD and QSDC, the user authentication process is determined to succeed or fail based on whether authentication codes of a transmitter and a receiver match, and the QBER estimation process is determined to succeed or fail based on whether an error rate of a QBER checking sequence exceeds a QBER threshold. Therefore, the user authentication process and the QBER estimation process are not performed at once, but are performed as separate processes using individual information.

In a user authentication method described in the preset disclosure, unlike the existing authentication method, whether or not authentication is passed is determined based on an error rate of authentication information. Therefore, the user authentication process applying the method described in the preset disclosure may be included/merged as a part of the QBER estimation process of determining whether there is an eavesdropping on the quantum channel based on the error rate of the QBER checking sequence.

Two methods proposed in the present disclosure for simultaneously performing the user authentication process and the QBER estimation process are described below.

<u>Method of simultaneously performing QBER estimation and user authentication while using preshared key only</u>

for user authentication.

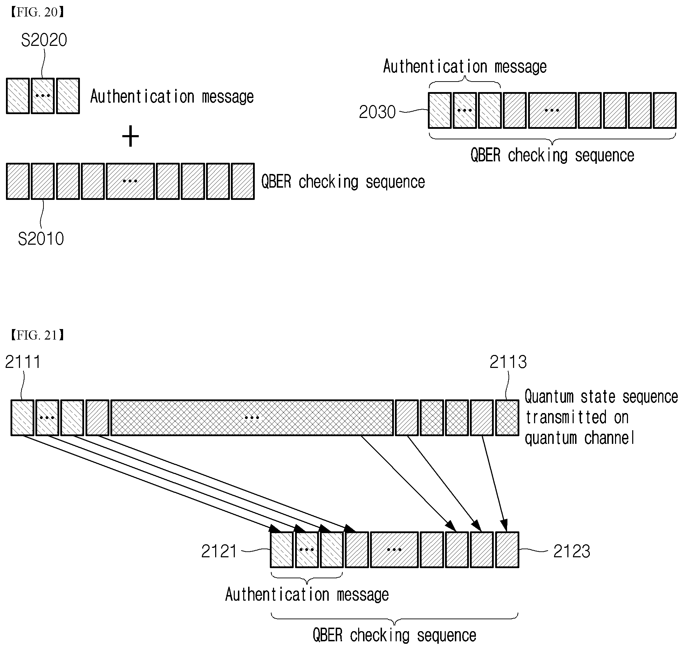

FIG. 20 illustrates an example of information used for authentication and QBER estimation in a method described in the present disclosure.

Referring to FIG. 20, a quantum communication protocol including the existing authentication method uses a method of individually generating message information for user authentication (2020) and checking sequence information for QBER estimation (2010). On the other hand, in the method described in the present disclosure of using a preshared key only for user authentication, message information for authentication (2121) may be included in a checking sequence for QBER estimation (2130). Therefore, the user authentication process may be first performed using some information (2030) of the QBER checking sequence, and in this case, a portion whose error rate is estimated in the authentication process may be reused when the error rate is determined in the QBER estimation. Thereafter, the error rate estimation is performed using only the QBER checking sequence that is not used for authentication during the QBER estimation. According to this method, the processing speed can be improved compared to the existing method in which the user authentication and the QBER estimation are performed using individual information.

The method described in the present disclosure of simultaneously performing the QBER estimation and the user authentication while using the preshared key only for user authentication includes the following processes.

(1) Alice (transmitter) and Bob (receiver) pre-share a preshared key to be used for user authentication before a quantum communication procedure starts.

(2) Alice (transmitter) transmits sequence information illustrated in FIG. 21 to Bob (receiver) through a quantum channel. FIG. 21 illustrates a process of selecting information to be used for authentication and QBER estimation among quantum state string information transmitted on a quantum channel described in the present disclosure. Among information to be used for QBER estimation, information having the same length as a length of the preshared key is authentication message information (2121) used for authentication and thus is selected from a fixed location pre-agreed between the transmitter and the receiver among transmitted sequences, and remaining information for QBER estimation from the authentication message information (2121) among all the sequence information is randomly selected in the same way as before.

(3) The user authentication procedure is the same as the user authentication method applying the method of using the preshared key to select the location of the authentication message as illustrated in FIG. 19, and thus the detailed process description is omitted.

(4) Next, if the user authentication fails, the quantum channel is re-configured and the process starts again from the beginning. Conversely, if the user authentication passes, the QBER estimation process is immediately performed.

(5) In the QBER estimation proces, a process in which the transmitter randomly extracts about 10% of information initially transmitted through the quantum channel from a random location to generate information to be used for QBER estimation, a process in which the receiver transmits to the transmitter (i) a measurement location for a location where a measurement is initially performed on information transmitted through the quantum channel, (ii) basis information used in the measurement, and (iii) a measurement value, so that the transmitter can estimate a rate of occurrence of errors among the extracted QBER checking sequences, and a process of estimating an error rate by comparing a QBER checking sequence generated by the transmitter with a measured value of information received from the receiver are performed, and the above processes determine whether there is an eavesdropper on the quantum channel.

In the method described in the present disclosure, an error rate is estimated (2121 in FIG. 21) through a location of a portion to be used for authentication among the QBER checking sequence that is pre-agreed between the transmitter and the receiver, and the QBER checking sequence is selected/extracted through random location selection from a remaining portion excluding the pre-agreed portion used for authentication among all quantum state information transmitted on the quantum channel. In the QBER estimation process applying the method described in the present disclosure, among all the quantum state information transmitted on the quantum channel, the error rate is estimated by adding (i) the number of error occurrences in the portion used for user authentication and (ii) the number of error occurrences in the QBER sequence extracted from the portion not used for user authentication. If the error rate does not exceed the QBER threshold, it may be ensured that there is no eavesdropper on the quantum channel, and thus the subsequent process continues to be performed. Otherwise, since an eavesdropper is present, the quantum communication process is interrupted and the quantum channel is re-configured.

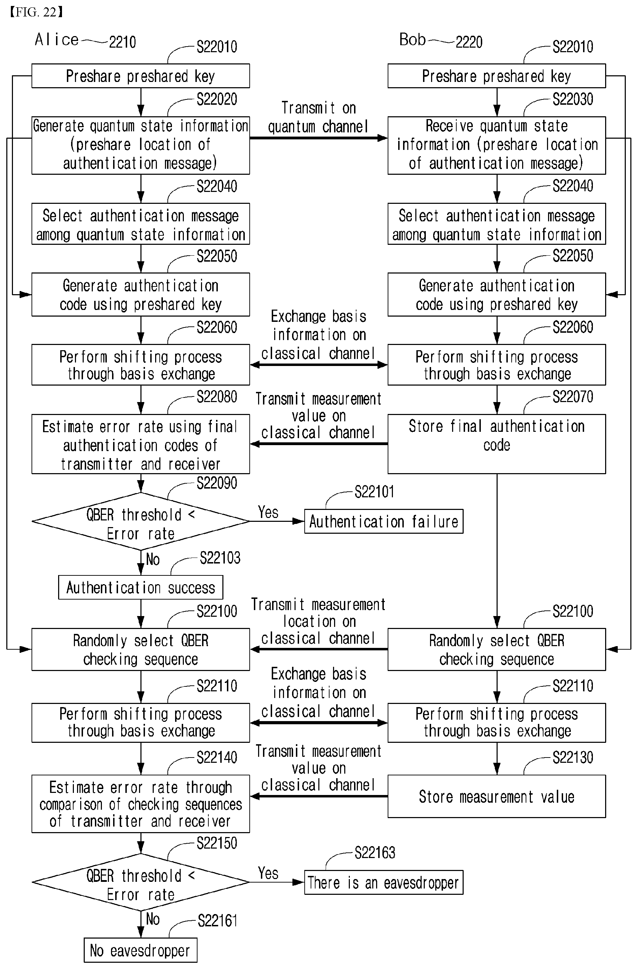

FIG. 22 illustrates an overall flowchart of an authentication scheme and a QBER estimation process that uses a pre-shared key described in the present disclosure for location selection of authentication information.

Referring to FIG. 22, a preshared symmetric key is first shared between a transmitter 2210 and a receiver 2220 (S22010). Thereafter, the transmitter 2210 generates quantum state information and transmits the quantum state information to the receiver 2220 through a quantum channel, and the receiver 2220 receives the quantum state information (S22020 and S22030). The quantum state information may be sequence information including (i) an authentication message, (ii) a message to be transmitted (information message), and (iii) information for QBER estimation. In the quantum state information, the authentication message may be included in a pre-agreed location between the transmitter 2210 and the receiver 2220. Next, the transmitter 2210 and the receiver 2220 select the authentication message from the quantum state information based on the pre-agreed location (S22040) and generate an authentication code using the preshared key (S22050).

Next, the transmitter 2210 and the receiver 2220 perform a basis information exchange process via a classical channel (S22060). Through the basis information exchange process, only a portion where the authentication message/authentication code is generated/measured using the same basis at a specific information location may remain in all the authentication messages/authentication codes respectively generated by the transmitter 2210 and the receiver 2220, and information portions using other bases may be removed (S22060). The information removal process may be referred to as sifting. Next, the receiver 2220 removes the portions of the authentication messages/authentication codes where the bases do not match through the basis information exchange process to generate a final authentication code to be used for authentication, and transmits the final authentication code to the transmitter 2210 via the classical channel (S22070). After the receiver 2220 transmits the final authentication code to the transmitter 2210 through the classical channel, the transmitter 2210 estimates an error rate by comparing the final authentication code received from the receiver 2220 with the final authentication code generated by the transmitter 2210 (S22080). The error rate estimation process is performed based on whether a QBER threshold is greater than an error rate obtained through the comparison between the authentication codes (S22090). In this instance, if the transmitter 2210 and the receiver 2220 are pre-authorized users, the two users would have selected the authentication message using the same preshared key. Therefore, no error greater than or equal to an environmental error rate, such as a channel error, occurs, and user authentication is successful (S22103). On the other hand, if one of the transmitter and the receiver is not an authorized user due to a man-in-the-middle attack, a man-in-the-middle attacker does not have the preshared key. Therefore, if the authentication message selection locations are different, an average of 50% of errors cannot be avoided, and user authentication fails (S22101). Although not illustrated in FIG. 22, if an error rate of the authentication information is determined to be less than or equal to a QBER threshold (the maximum allowable rate of errors occurring environmentally), the authentication passes and then a quantum communication process continues. On the other hand, if the authentication error rate exceeds the QBER threshold, the authentication fails, the quantum communication process is interrupted, and the quantum channel is re-configured. If the authentication is successful (S22103), the QBER estimation process is performed.

The transmitter 2210 and the receiver 2220 generate a QBER checking sequence by randomly selecting information in a portion excluding the message used for authentication from the initially transmitted quantum state information. Thereafter, the receiver 2220 transmits a measurement location and basis information used for measurement to the transmitter 2210 and performs a sifting process (S22100/22110). Thereafter, the receiver 2220 stores a measurement value and transmits the measurement value on the classical channel (S22130). Thereafter, the transmitter 2210 estimates an error rate by comparing the measurement value received from the receiver 2220 with the QBER checking sequence information randomly extracted by the transmitter 2210 using the measurement value, measurement location information, and the basis information used for measurement which are received from the receiver 2220 (S22140). In this instance, in step S22150 of comparing the error rate with the QBER threshold, the error rate is estimated by adding (i) the number of error occurrences in the portion used for user authentication and (ii) the number of error occurrences in the QBER sequence extracted from the portion not used for user authentication, among all the quantum state information transmitted on the quantum channel, and the error rate is compared with the QBER threshold. If the error rate does not exceed the QBER threshold, it may be ensured that there is no eavesdropper on the quantum channel, and thus the subsequent process continue to be performed (S22161). Otherwise, since an eavesdropper is present, the quantum communication process is interrupted and the quantum channel is re-configured (S22163).

<u>Method of extending preshared key to simultaneously apply it to user authentication and OBER estimation</u>

This method proposes a method in which the preshared key described above is used not only for user authentication but also for QBER estimation. In order for this method to be established, a length of the preshared key must be long enough to select the location of the QBER checking sequence from all information transmitted on the quantum channel. However, since the preshared key is information used for user authentication, the length of the preshared key is very short compared to a length of all the quantum state information transmitted on the quantum channel. Therefore, this method proposes a method in which the preshared key is extended by the length of the quantum state information and then the location of the QBER checking sequence is selected for/from all the quantum state information using the extended preshared key. In this instance, the user authentication is first performed using a portion of the selected QBER checking sequence. If the authentication is passed, an error estimation result of the portion of the QBER checking sequence used for authentication and a result obtained after estimating an error rate of a portion not used for authentication are added to perform the QBER estimation process. Hence, the authentication and the QBER estimation are performed at the same time. That is, the error rate obtained from a portion of the entire message used for user authentication is also reused in the QBER estimation process.

The process for user authentication in the method may be performed in the following order.

(1) Alice (transmitter) and Bob (receiver) pre-share Preshared key P_1 before quantum communication.

(2) Alice (transmitter) transmits sequence information including a message transmitted to Bob (receiver) and QBER estimation information to Bob (receiver) through the quantum channel.

(3) Bob (receiver) selects a portion (generally about 10%) of the entire received sequence and uses it for the QBER estimation and authentication processes. In this method, the location of the information to be used for QBER estimation is selected using the preshared key, and then a portion of all the selected information to be used for the QBER estimation is first used for the authentication. Afterwards, if the authentication is passed, both the information used for authentication among all the information to be used for the QBER estimation and the information not used for authentication are used for the QBER estimation process. Conversely, if the user authentication fails, the subsequent process including the QBER estimation and the post-processing process are not performed, and the initial processes for quantum communication are restarted.

(Method of selecting location of sequence used for QBER estimation and user authentication)

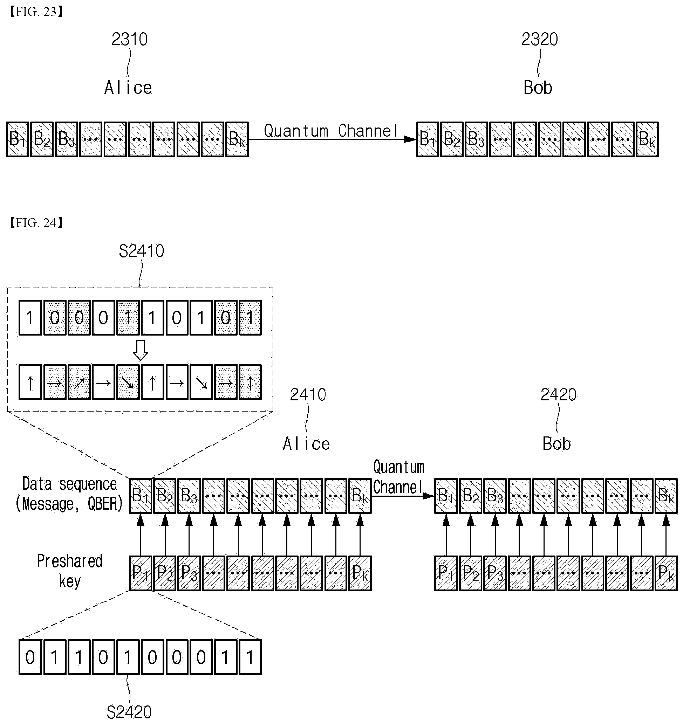

This method relates to a method of selecting a location of a sequence used for QBER estimation and user authentication in a method in which a preshared key is used for not only the user authentication process but also the QBER estimation process. A transmitter and a receiver divide an entire quantum information sequence including (i) message information and (ii) QBER checking information shared through a quantum channel into k blocks based on a length of the preshared key, as illustrated in FIG. 23. FIG. 23 illustrates an example of a method of configuring a quantum data block described in the present disclosure.

In this instance, a length of each of the k divided blocks is the same as the length of the preshared key, and the length of the preshared key determining the length of each block is determined by a security strength criterion applied as a standard in the authentication technique. The higher the security strength, the longer the preshared key is used. A method of setting the length of the preshared key based on the security strength criterion is described in detail in the safety analysis described below.

A method of setting a length of a first quantum state information block in the entire quantum information sequence divided into k blocks and a method of selecting a location of information to be used for QBER estimation and user authentication are described below.

In a first quantum state information block (Data block) B_1, a transmitter and a receiver select a location of information to be used for QBER estimation and authentication based on preshared key P_1 that the transmitter and the receiver have. Next, referring to FIG. 24, in a quantum state information block B_1, values corresponding to locations having a value of 1 in the preshared key P_1 are selected as information for QBER estimation and authentication (S2410/S2420). In general, since the preshared key is random information, all the information includes half of the information of 1 and the other half of 0. Therefore, when the location of the value '1' of the preshared key is selected as QBER estimation information, half of the values of the quantum state information block B_1 are selected. However, since it is appropriate to use only about 10% of all the quantum state information in QBER estimation, a length of the pre-selected location information shall be reduced to 1/5. Therefore, when locations having 1 in the preshared key pre-shared between the transmitter and the receiver are listed in order, only locations corresponding to multiples of 5 are selected as location information to be used for QBER estimation. For example, if the value of the preshared key is "1110100100", only a 5th bit string '1' and a 10th bit string '0' are used to select information to be used for QBER estimation.

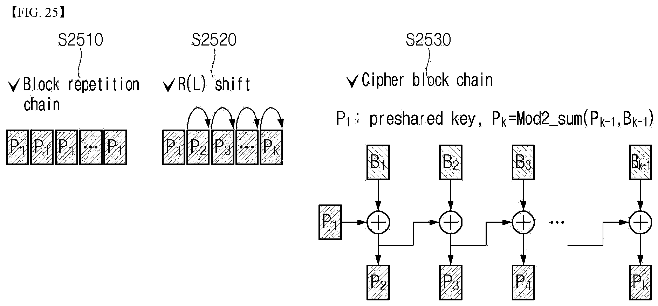

Since a length of the Preshared key P_1 is much shorter than a length of the entire data sequence, it is impossible to select the location of the information to be used for QBER estimation and authentication in the entire data sequence using only information of the preshared key. Therefore, the length of the Preshared key shall be extended to be the same as the length of the data sequence. In order to extend the length of the Preshared key to be the same as the length of the data sequence, several methods may be used as illustrated in FIG. 25. FIG. 25 illustrates an example of performing an authentication method described in the present disclosure.

First, a method of repeating the same preshared key block until the length of the data sequence and the length of the preshared key are the same may be applied (S2510). Second, each time the preshared key block is repeated, bit values constituting a previous preshared key block may be right-shifted or left-shifted (S2520). Finally, when a k-th data block is generated, the preshared key corresponding to the k-th block may be generated through modulo 2 sum operation of an immediately previous (k-1)th data block (B_k-1) and an immediately previous preshared key block (P_k-1).

The transmitter and the receiver select the same method among the methods described above. Through this, the transmitter and the receiver select a sequence corresponding to about 10% of the entire data sequence as a QBER sequence, and the selected QBER sequence may be selected through the same preshared key and the preshared key extension method.

(User Authentication Method)

This method relates to a user authentication method performed based on a method in which a preshared key is used in not only a user authentication process but also a QBER estimation process.

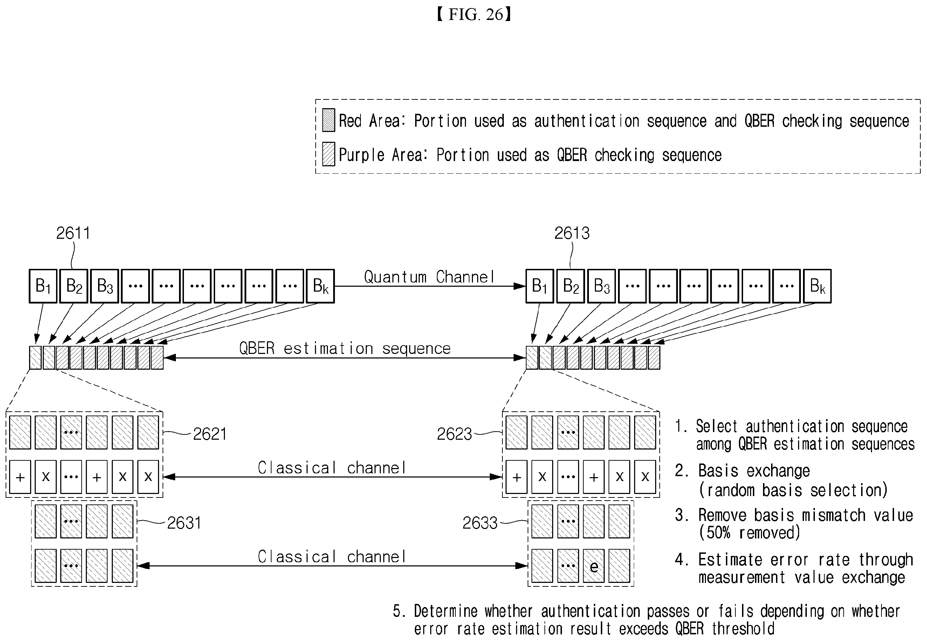

Referring to FIG. 26 which illustrates an example of performing user authentication, a part of a QBER checking sequence selected from all quantum state information sequences (2611/2613) through preshared key extension is selected and used as information for user authentication (1.). A location of the QBER checking sequence to be used for authentication may be a part of information for a front part of the QBER checking sequence, as illustrated in FIG. 26. However, the information used for authentication in the QBER checking sequence may be a location other than the front part of the QBER checking sequence, and does not need to be fixed to a specific location.

Next, the transmitter and the receiver exchange basis information used for measuring quantum state information to be used for authentication through a classical channel (2.), and then select only locations where basis matches between the transmitter and the receiver to determine whether authentication passes or fails, and remove authentication information where the basis does not match (3.). The transmitter and the receiver exchange the values of the authentication messages at the locations where the basis matches with each other through a classical channel to estimate an error rate (4.). If the transmitter and the receiver are authorized users, the two users select an authentication message using the same preshared key, and thus no error greater than or equal to an environmental error rate, such as a channel error, occurs. On the other hand, if one of the transmitter and receiver is not an authorized user due to a man-in-the-middle attack, a man-in-the-middle attacker does not have the preshared key. Therefore, if the authentication message selection locations are different, an average of 50% of errors cannot be avoided. If an error rate of the authentication information is determined to be less than or equal to a QBER threshold (the maximum allowable rate of errors occurring environmentally), the authentication passes and a next step, the QBER estimation process is performed. On the other hand, if the authentication error rate exceeds the QBER threshold, the authentication fails and the quantum communication process is interrupted.

The process of applying the preshared key to the location selection and performing the user authentication has been described above. In this method, a part of the QBER estimation information is used for user authentication, and whether the user authentication passes is determined based on the error rate and the QBER threshold, not whether an authentication code completely matches. Therefore, a result of the user authentication may be reused in the QBER estimation process.

(QBER Estimation Process)

This method relates to a QBER estimation method performed based on a method in which a preshared key is used in not only a user authentication process but also a QBER estimation process.

In the QBER estimation process in this method, the QBER estimation process is performed including an error rate estimation result used in the user authentication. Therefore, an error rate estimation process in the user authentication process may be considered as a part of the QBER estimation process, and the detailed QBER estimation process is as follows.

(1) Since some of QBER checking sequences to be used for QBER estimation have been used in the user authentication process, an error occurrence result obtained from the information used in the authentication process is also used in the QBER estimation process.

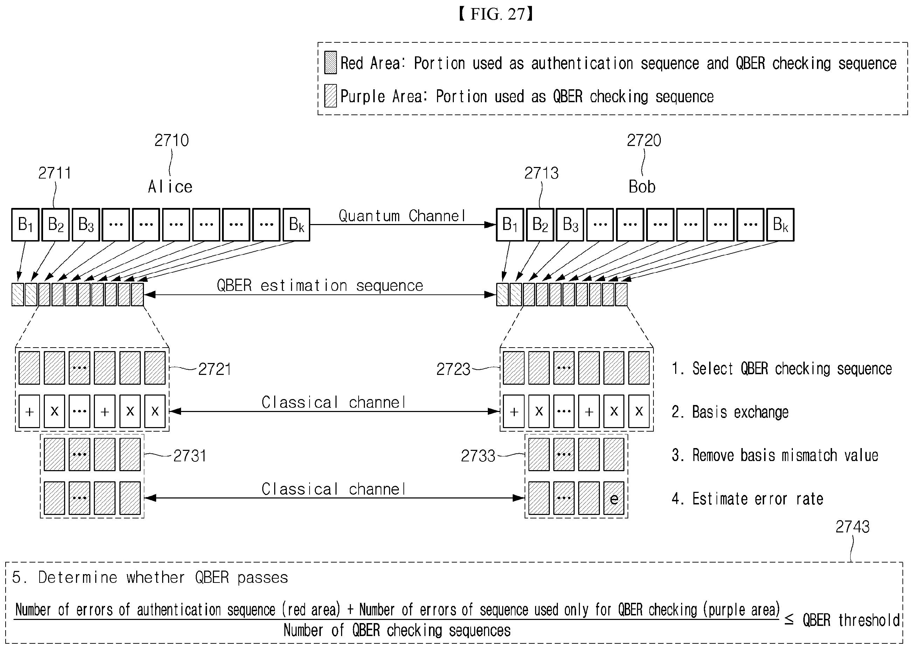

(2) Referring to FIG. 27, in order to estimate an error rate for a part of the QBER checking sequence that is not used in the user authentication, a transmitter and a receiver exchange basis information used for measuring quantum state information.

(3) in this instance, a part of the QBER checking sequence using the basis, which is not the same between the transmitter and the receiver, is removed.

(4) Only a part of the QBER checking sequence which uses the same basis is used for the QBER estimation, and the error rate is estimated by comparing values of the transmitter and the receiver in the part used for QBER estimation.

(5) The number of QBER checking sequences, in which the basis matches between the transmitter and the receiver, among all the QBER checking sequences is used as the denominator for calculating the error rate in the QBER estimation, and a sum of the number of authentication information determined as an error in the user authentication process and the number of QBER checking sequences in which the error occurs among the remaining QBER checking sequences is used as the numerator, thereby performing the QBER estimation.

(6) If it is determined that the error rate obtained through the QBER estimation does not exceed a QBER threshold, it is guaranteed that there is no eavesdropper on a quantum channel. Therefore, the transmitter and the receiver perform a quantum communication postprocessing process. In the opposite case, the transmitter and the receiver stop the quantum communication.

**Application** of preshared **key based user authentication method to quantum communication protocol**

Examples of applying a user authentication scheme, that use a preshared key to determine a location of information to be used for user authentication, to various quantum communication protocols are described below. More specifically, examples of applying the methods described in the present disclosure to QKD and QSDC, which are representative quantum communication protocols, are described.

An example of adding a user authentication process proposed in the present disclosure to a secret key sharing process of the QKD protocol, which is a scheme for sharing a quantum secret key, is first described. Next, an example of adding the user authentication process proposed in the present disclosure to the QSDC protocol, which is a scheme for securely directly transmitting a message through a quantum channel, is described.

Quantum Key Distribution (QKD) system including preshared key based user authentication method

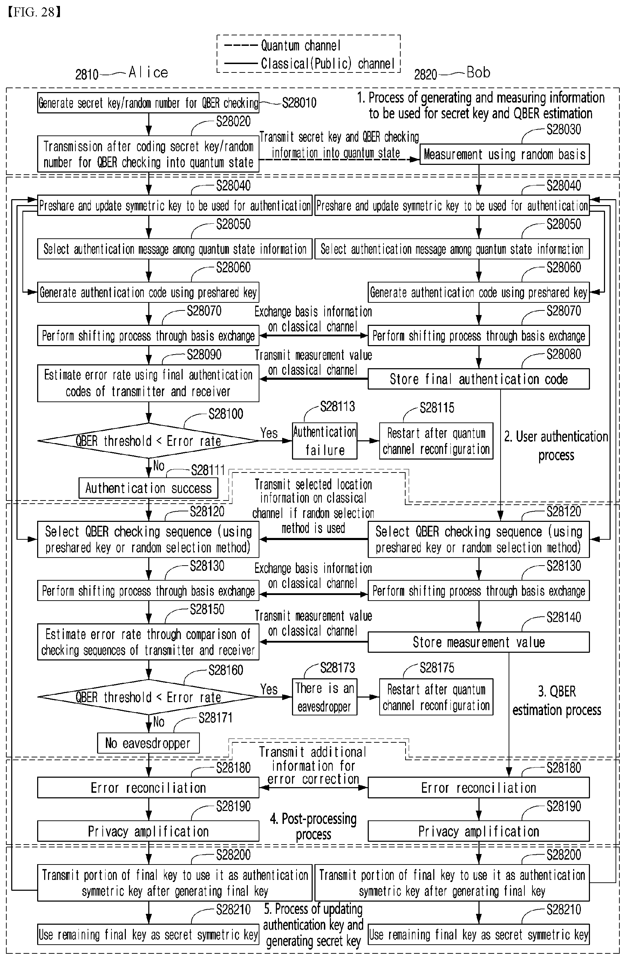

FIG. 28 illustrates an example of applying a user authentication method described in the present disclosure to a QKD method.

First, a QKD transmitter 2810 generates information to be used for QBER checking and secret key information to be used to ensure the safety of data transmitted on a classical channel, and transmits them through a quantum channel (S28010/S28020). A receiver 2820 measures the information transmitted on the quantum channel using a random basis (S28030).

Next, the QKD transmitter 2810 and the receiver 2820 perform a user authentication process to check whether they are pre-authorized users. A location selection method based on a preshared key described in the present disclosure may be applied to this process. In this process, the preshared key shall be pre-shared and updated before the start of the user authentication process in FIG. 28 (S28040).

Next, the QKD transmitter 2810 and the receiver 2820 select an authentication message from quantum state information based on the pre-agreed location (S28050) and generate an authentication code using the preshared key (S28060).

Next, the transmitter 2810 and the receiver 2820 perform a basis information exchange process via a classical channel. Through the basis information exchange process, only a portion where the authentication message/authentication code is generated/measured using the same basis at a specific information location may remain in all the authentication messages/authentication codes respectively generated by the transmitter 2810 and the receiver 2820, and information portions using other bases may be removed (S28070). The information removal process may be referred to as sifting. Next, the receiver 2820 removes the portions of the authentication messages/authentication codes where the bases do not match through the basis information exchange process to generate a final authentication code to be used for authentication, and transmits the final authentication code to the transmitter 2810 via the classical channel (S28080). After the receiver 2820 transmits the final authentication code to the transmitter 2810 through the classical channel, the transmitter 2810 estimates an error rate by comparing the final authentication code received from the receiver 2820 with the final authentication code generated by the transmitter 2810 (S28090). The error rate estimation process is performed based on whether a QBER threshold is greater than an error rate obtained through the comparison between the authentication codes (S28100). In this instance, if the transmitter 2810 and the receiver 2820 are pre-authorized users, the two users would have selected the authentication message using the same preshared key. Therefore, no error greater than or equal to an environmental error rate, such as a channel error, occurs, and user authentication is successful (S28111). On the other hand, if one of the transmitter and the receiver is not an authorized user due to a man-in-the-middle attack, a man-in-the-middle attacker does not have the preshared key. Therefore, if the authentication message selection locations are different, an average of 50% of errors cannot be avoided, and user authentication fails (S28113). If an error rate of the authentication information is determined to be less than or equal to a QBER threshold (the maximum allowable rate of errors occurring environmentally), the authentication passes and then a quantum communication process continues. On the other hand, if the authentication error rate exceeds the QBER threshold, the authentication fails, the quantum communication process is interrupted, and the quantum channel is re-configured (S28115). If the authentication is successful (S28103), the QBER estimation process is performed.

Next, the transmitter 2810 and the receiver 2820 generate a QBER checking sequence by randomly selecting information in a portion excluding the message used for authentication from the initially transmitted quantum state information or using the extended preshared key (S28120). Thereafter, the receiver 2820 transmits a measurement location and basis information used for measurement to the transmitter 2810 and performs a sifting process (S28130). Thereafter, the receiver 2820 stores a measurement value and transmits the measurement value on the classical channel (S28140). Thereafter, the transmitter 2810 estimates an error rate by comparing the measurement value received from the receiver 2820 with the QBER checking sequence information randomly extracted by the transmitter 2810 using the measurement value, measurement location information, and the basis information used for measurement which are received from the receiver 2820 (S28150). In this instance, in step S28160 of comparing the error rate with the QBER threshold, the error rate is estimated by adding (i) the number of error occurrences in the portion used for user authentication and (ii) the number of error occurrences in the QBER sequence extracted from the portion not used for user authentication, among all the quantum state information transmitted on the quantum channel, and the error rate is compared with the QBER threshold. If the error rate does not exceed the QBER threshold, it may be ensured that there is no eavesdropper on the quantum channel, and thus the subsequent process continue to be performed (S28171). Otherwise, since an eavesdropper is present, the quantum communication process is interrupted and the quantum channel is re-configured (S28173/S28175).

If both the user authentication process and the QBER estimation process are successful, the post-processing process of the secret symmetric key to be used for data encryption between the transmitter 2810 and the receiver 2820 is performed. The post-processing process is performed including QBER estimation, error reconciliation, and privacy amplification processes (S28180/S28190), and thus a secret symmetric key with guaranteed security can be obtained.

The biggest difference between the method described in the present disclosure and the existing method is that the QBER estimation process is present in the post-processing process. In user authentication of the existing QKD technique, authentication information is separately generated, then user authentication is performed, and information for QBER estimation called a QBER checking sequence is separately generated to thereby perform error rate estimation. On the other hand, in the method described in the present disclosure, the QBER checking sequence is repeatedly used in the user authentication and QBER estimation processes, and the authentication process and the QBER estimation process are performed simultaneously, which is a difference from the existing QKD method.

Returning again to FIG. 28, the user authentication process shall be performed to check whether there is a man-in-the-middle attack each time the secret key information is transmitted on the quantum channel, and thus the preshared key to be used for the authentication process shall be updated. To this end, a portion of the secret symmetric key generated through the post-processing process is separated and used as an update value for the preshared key to be used in a next authentication process (S28180). Thereafter, the remaining secret key is used as a secret key to be used for encryption/decryption of data to be transmitted on the classical channel (S28210).

Quantum Secure Direct Communication (QSDC) system. including preshared key based user authentication method

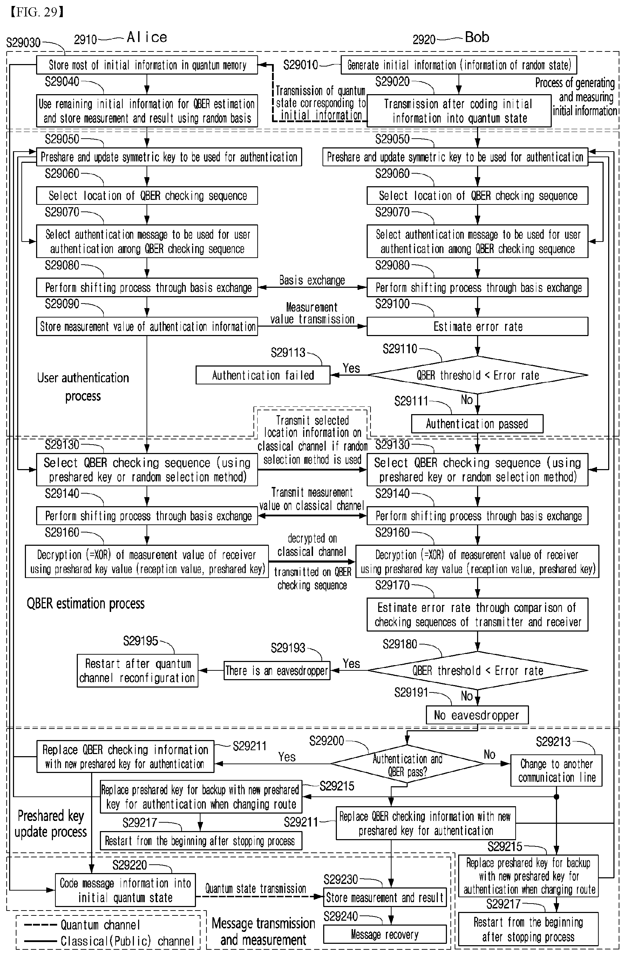

FIG. 29 illustrates an example of applying a user authentication method described in the present disclosure to DL04 QSDC quantum communication protocol for securely transmitting classical information through a quantum channel based on single photons.

Referring to FIG. 29, in DL04 QSDC protocol, a user authentication method that applies the preshared key described in the present disclosure to the location selection of authentication information and a method of simultaneously performing QBER estimation and user authentication can be added.

The DL 04 QSDC protocol is a single-photon-based QSDC technique. In a process of generating and measuring initial information in the DL 04 QSDC protocol, a receiver 2920 encodes random information not including message information into an initial quantum state and transmits it to a transmitter 2910 on a quantum channel (S29010/529020). The transmitter 2910 measures initial quantum state information received from the receiver 2920, and most of the measured initial information is stored in a quantum memory (S29030). In this instance, the remaining initial information is used for QBER estimation and is measured with a random basis, and its result is stored (S29040).

Next, in the user authentication process, the transmitter 2910 and the receiver 2920 perform a user authentication process to check whether they are pre-authorized users. In this process, the pre-shared key shall be pre-shared and updated before the start of the user authentication process in FIG. 29 (S29050).

Next, the transmitter 2910 and the receiver 2920 select a location of a checking sequence using the preshared key from quantum state information based on the pre-agreed location, and select an authentication message to be used for checking sequence user authentication using the preshared key (S29070).

Next, the transmitter 2910 and the receiver 2920 perform a basis information exchange process via a classical channel. Through the basis information exchange process, only a portion where the authentication message/authentication code is generated/measured using the same basis at a specific information location may remain in all the authentication messages/authentication codes respectively generated by the transmitter 2910 and the receiver 2920, and information portions using other bases may be removed (S29080). The information removal process may be referred to as sifting. Next, the transmitter 2910 removes the portions of the authentication messages/authentication codes where the bases do not match through the basis information exchange process to generate a final authentication code to be used for authentication, and transmits the final authentication code to the receiver 2920 via the classical channel (S29090). After the transmitter 2910 transmits the final authentication code to the receiver 2920 through the classical channel, the receiver 2920 estimates an error rate by comparing the final authentication code received from the transmitter 2910 with the final authentication code generated by the receiver 2920 (S29100). The error rate estimation process is performed based on whether a QBER threshold is greater than an error rate obtained through the comparison between the authentication codes (S29100). In this instance, if the transmitter 2910 and the receiver 2920 are pre-authorized users, the two users would have selected the authentication message using the same preshared key. Therefore, no error greater than or equal to an environmental error rate, such as a channel error, occurs, and user authentication is successful (S29111). On the other hand, if one of the transmitter and the receiver is not an authorized user due to a man-in-the-middle attack, a man-in-the-middle attacker does not have the preshared key. Therefore, if the authentication message selection locations are different, an average of 50% of errors cannot be avoided, and user authentication fails (S29113).

If the authentication is successful (S29111), the QBER estimation process is performed. The transmitter 2910 and the receiver 2920 generate a QBER checking sequence by randomly selecting information in a portion excluding the message used for authentication from the initially transmitted quantum state information or using the extended preshared key (S29120/S29130). In this instance, if the QBER checking sequence is generated using a random selection method, the transmitter 2910 transmits a location where the QBER sequence is selected to the receiver 2920.

Next, the transmitter 2910 and the receiver 2920 exchange the basis information used for the measurement and perform the sifting process (S29140). Next, the transmitter 2910 encrypts a measurement value using a value of the preshared key and transmits it to the receiver 2920 on the classical channel (S29150). The receiver 2920 decrypts the encrypted measurement value using the preshared key value. After that, the receiver 2920 compares the checking sequence values between the transmitter and the receiver to estimate the error rate (S29170), and determines whether there is an eavesdropper by comparing the QBER threshold value and the error rate (S29180). In this instance, in step S29180 of comparing the error rate with the QBER threshold, the error rate is estimated by adding (i) the number of error occurrences in the portion used for user authentication and (ii) the number of error occurrences in the QBER sequence extracted from the portion not used for user authentication, among all the quantum state information transmitted on the quantum channel, and the error rate is compared with the QBER threshold. If the error rate does not exceed the QBER threshold, it may be ensured that there is no eavesdropper on the quantum channel, and thus the subsequent process continue to be performed (S29191). Otherwise, since an eavesdropper is present, the quantum communication process is interrupted and the quantum channel is re-configured (S29193/S29195).

If both user authentication and QBER estimation are passed, the QBER checking sequence is replaced with a preshared key to be used in a next user authentication (S19211). Thereafter, the transmitter 2910 encodes message information into the initial quantum state and transmits it to the receiver 2920 (S29220), and the receiver 2920 measures the received information, stores a result, and performs a message restoration procedure (S29230/S29240). Conversely, if either the user authentication or the QBER estimation fails, the communication line may be changed from the existing communication line to another communication line (S29213). When the communication line is changed, the preshared key to be used in the next user authentication cannot be replaced with the QBER checking sequence. Therefore, the pre-stored backup preshared key is used as the new preshared key to be used in the next user authentication. Thereafter, the process in progress is stopped, and the process is performed again from the beginning (S29217).

In addition, a method of simultaneously using the preshared key for location selection of authentication information and basis selection.

The present disclosure has mainly described the method of using the preshared key to select the location of the authentication message code in the user authentication process. However, since the core of user authentication is to prevent a user who does not have the preshared key from knowing how the authorized transmitting and receiving entities used the preshared key for user authentication, the preshared key should not be used only for the location selection. Therefore, the preshared key may be used by the authorized transmitting and receiving entities for the basis selection of the authentication message for user authentication. That is, the basis used by the transmitter that transmits the authentication message when generating the authentication code and the basis used by the receiver to use the authentication message may be configured to be the same using the preshared key. Therefore, the preshared key may be sequentially applied to the location selection and basis selection processes when the authentication code is generated from the authentication message. In this way, when the preshared key is applied to both the location selection and basis selection processes, the problem in that half of the authentication messages has not been used due to the random selection of the basis in the existing user authentication technique can be solved. At the same time, the throughput of the authentication process can be improved since there is no need to share the location and the basis information related to the authentication message transmitted on the classical channel, the processing rate of the authentication process can be improved and an amount of information leaked on the classical channel can be minimized.

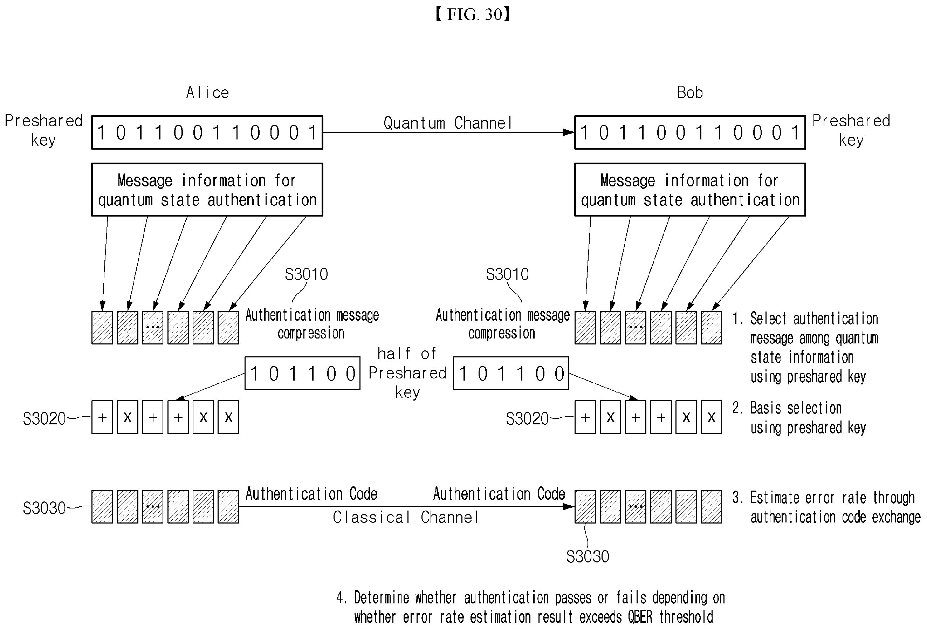

FIG. 30 illustrates an example of performing a user authentication process where a pre-shared symmetric key is applied to both location selection and basis selection.

In FIG. 30, since the preshared key is not information exposed to the classical channel, the preshared key can be reused under a single block information transmission situation. First, the preshared key is used to select location information to be used as an authentication code among the quantum state authentication messages, and the quantum state authentication message where the preshared key is located with a value of either 0 or 1 is selected as the authentication code, and in this process, an original authentication message is reduced by half (S3010). Next, unlike the existing quantum communication in which the basis selection to be used for the measurement of quantum information for authentication is performed randomly, in the method of FIG. 30, half of the preshared keys used for the above location selection are used for the basis selection, and if the value of the preshared key is 0, a cross basis is selected, and if it is 1, a diagonal basis is selected, and the measurement of the quantum state information for authentication is performed (S3020). In this instance, the preshared key may be used in the same direction as in the location selection, or may be applied in the opposite direction. Next, the measured authentication code is compared between the transmitter and the receiver to estimate the error rate, and whether the authentication passes or fails is determined based on the result (S3030). For user authentication using this method, it has the effect of having both the advantage of using the preshared key for the location selection and the advantage of using the preshared key for the basis selection.

## Effect

The effect of a location-based user authentication scheme using the preshared key proposed in the present disclosure in terms of stability is described below.

A length of a preshared key that can satisfy a security strength level of a symmetric key currently presented as a standard by NIST may be determined based on the method described in the present disclosure and may be set based on a minimum length of the preshared key that may be lower in attack success probability than the security strength. It shows that the user authentication scheme in the present disclosure can secure high security against the man-in-the-middle attack based on this value. Considering that an error of up to 11% is an acceptable error rate in quantum communication when considering noise, etc. occurring in an actual communication environment, a success probability $Ps$ of the man-in-the-middle attack may be expressed as in Equation 1 below.

【Equation 1】

$$P_s = \sum_{k=0}^{\lfloor 0.11n \rfloor} \binom{n}{k} \left(\frac{n-1}{2n}\right)^k \left(\frac{n+1}{2n}\right)^{n-k}$$

In the above Equation, the probability $\frac{n+1}{2n}$ that no error occurs may be expressed as a sum of a probability of a case where measurement locations are inconsistent but measurement values of the transmitter and the receiver are the same and a probability of a case where the measurement locations are consistent. On the other hand, a probability $\frac{n-1}{2n}$ that an error occurs may occur when the measurement locations are inconsistent and the measurement values of the transmitter and the receiver are different.

The standard bit number of the security strength determined by NIST is classified into 112 or less, 128, 192 and 256. In the case of 256 bits, it represents a maximum security strength known to be able to guarantee safety until the 2030s based on the current quantum computer and quantum algorithm levels. And, the fact that the standard bit number of the security strength is 256 bits means that it would take $2^{256}$ repeated calculations to find the weakness of the encryption technique and perform a successful attack.

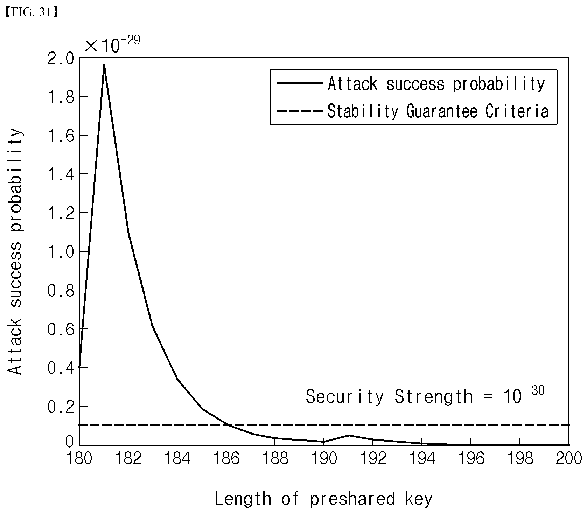

FIGS. 31 to 33 illustrate a minimum length of a pre-shared symmetric key required to ensure security per security strength.

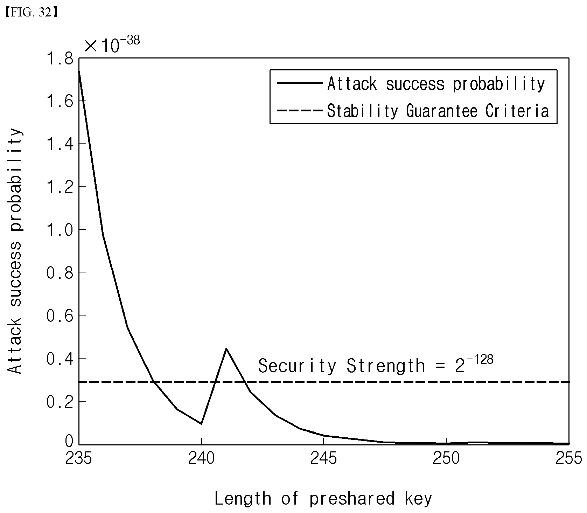

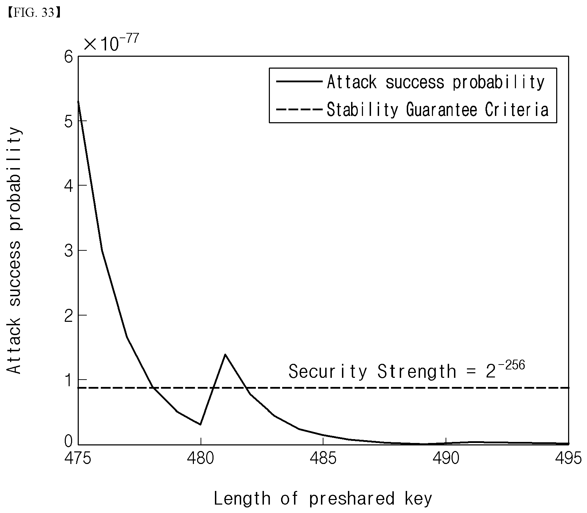

FIG. 31 illustrates a minimum length of a preshared key that can ensure security at a level of about 112 bits, which is the lowest standard security strength, FIG. 32 illustrates a minimum length of a preshared key at 128 bits, which is the most widely used standard security strength, and FIG. 33 illustrates a length of a preshared key that satisfies 256 bits, which is the highest standard security strength among current standard techniques. As can be seen from FIGS. 31 to 33, the preshared key length that can lower a success rate of a man-in-the-middle attack below the security strength level in each security strength criterion increasers as the security strength increases, and it can be seen that the technique according to the present disclosure can satisfy the current strongest security strength level when using 482 bits or more of security strength bits.

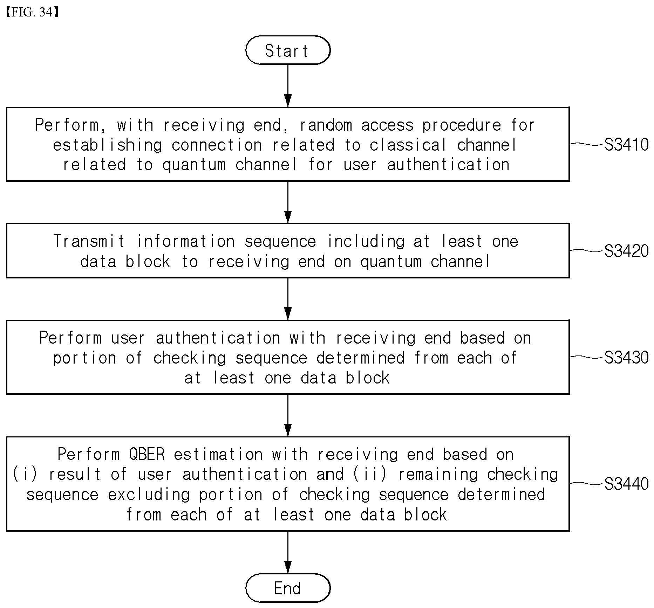

FIG. 34 is a flowchart illustrating an example in which a user authentication method described in the present disclosure is performed by a transmitting end.

First, the transmitting end performs, with a receiving end, a random access procedure for establishing a connection related to a classical channel related to a quantum channel for user authentication, in S3410.

The random access procedure includes a step of transmitting a random access preamble to the receiving end, a step of receiving a random access response from the receiving end, a step of transmitting a connection request message to the receiving end based on the random access response, and a step of receiving a contention resolution message from the receiving end.

Next, the transmitting end transmits an information sequence including at least one data block to the receiving end on the quantum channel, in S3420.

Based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block. The preshared key is used to select a location of a sequence to be used for the user authentication among sequences included in a specific data block related to the user authentication among the at least one data block.

Next, the transmitting end performs the user authentication with the receiving end based on a portion of the checking sequence determined from each of the at least one data block, in S3430.

Finally, the transmitting end performs the QBER estimation with the receiving end based on i) a result of the user authentication and (ii) a remaining checking sequence excluding the portion of the checking sequence determined from each of the at least one data block, in S3440.

Here, (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

The transmitting end includes a transmitter transmitting a radio signal, a receiver receiving the radio signal, at least one processor, and at least one computer memory operably connectable to the at least one processor and storing instructions performing operations based on being executed by the at least one processor. The operations include the steps described with reference to FIG. 34.

The operations described with reference to FIG. 34 may be stored in a non-transitory computer readable medium (CRM) storing one or more instructions. The non-transitory computer readable medium stores one or more instructions executable by one or more processors, and the one or more instructions allow the transmitting end to perform the operations described with reference to FIG. 34.

In a device including one or more memories and one or more processors operably connected to the one or more memories, the one or more processors control the device to perform the operations described with reference to FIG. 34.

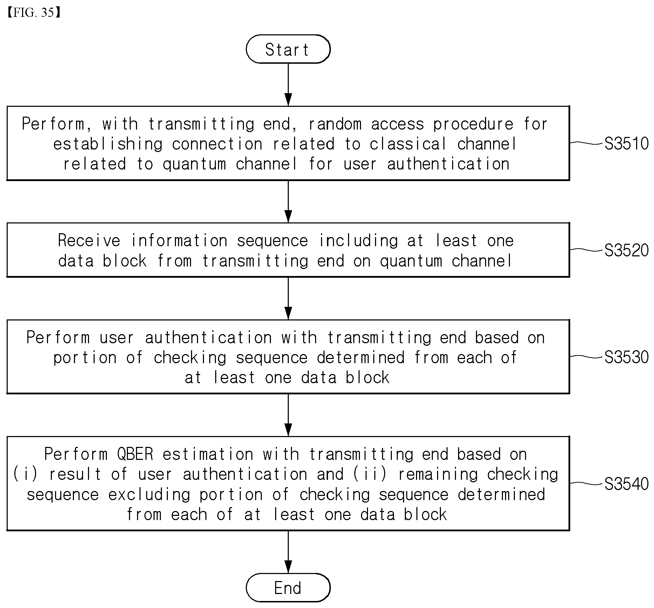

FIG. 35 is a flowchart illustrating an example in which a user authentication method described in the present disclosure is performed by a receiving end.

First, the receiving end performs, with a transmitting end, a random access procedure for establishing a connection related to a classical channel related to a quantum channel for user authentication, in S3510.

The random access procedure includes a step of receiving a random access preamble from the transmitting end, a step of transmitting a random access response to the transmitting end, a step of receiving a connection request message from the transmitting end based on the random access response, and a step of transmitting a contention resolution message to the transmitting end.

Next, the receiving end receives an information sequence including at least one data block from the transmitting end on the quantum channel, in S5520.

Based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block. The preshared key is used to select a location of a sequence to be used for the user authentication among sequences included in a specific data block related to the user authentication among the at least one data block.

Next, the receiving end performs the user authentication with the transmitting end based on a portion of the checking sequence determined from each of the at least one data block, in S3530.

Finally, the receiving end performs the QBER estimation with the transmitting end based on i) a result of the user authentication and (ii) a remaining checking sequence excluding the portion of the checking sequence determined from each of the at least one data block, in S3540.

Here, (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

The receiving end includes a transmitter transmitting a radio signal, a receiver receiving the radio signal, at least one processor, and at least one computer memory operably connectable to the at least one processor and storing instructions performing operations based on being executed by the at least one processor. The operations include the steps described with reference to FIG. 35.

The operations described with reference to FIG. 35 may be stored in a non-transitory computer readable medium (CRM) storing one or more instructions. The non-transitory computer readable medium stores one or more instructions executable by one or more processors, and the one or more instructions allow the receiving end to perform the operations described with reference to FIG. 35.

In a device including one or more memories and one or more processors operably connected to the one or more memories, the one or more processors control the device to perform the operations described with reference to FIG. 35.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Availability]

The present disclosure has been described focusing on examples applying to 3GPP LTE/LTE-A and the 5G system, but can be applied to various wireless communication systems in addition to 3GPP LTE/LTE-A and the 5G system.

**Claims**

1. A method of performing, by a transmitting end, a user authentication in a quantum communication system, the method comprising:

    performing, with a receiving end, a random access procedure for establishing a connection related to a classical channel related to a quantum channel for the user authentication,
    wherein the random access procedure includes:

        transmitting a random access preamble to the receiving end;
        receiving a random access response from the receiving end;
        transmitting a connection request message to the receiving end based on the random access response; and
        receiving a contention resolution message from the receiving end;

    transmitting, to the receiving end, an information sequence including at least one data block on the quantum channel,
    wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block,
    wherein the preshared key is used to select a location of a sequence to be used for the user authentication among sequences included in a specific data block related to the user authentication among the at least one data block;
    performing the user authentication with the receiving end based on a portion of the checking sequence determined from each of the at least one data block; and
    performing the QBER estimation with the receiving end based on i) a result of the user authentication and (ii) a remaining checking sequence excluding the portion of the checking sequence determined from each of the at least one data block,

wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

2. The method of claim 1, wherein performing the user authentication comprises transmitting, to the receiving end, a message for the user authentication generated based on the portion of the checking sequence determined from each of the at least one data block.

3. The method of claim 2, wherein performing the user authentication further comprises:

transmitting, to the receiving end, information for a basis used to generate the message for the user authentication; and
receiving, from the receiving end, measurement basis information for a basis that the receiving end uses to measure the transmitted message for the user authentication.

4. The method of claim 3, wherein performing the user authentication further comprises:

determining, based on the measurement basis information, user authentication information related to a matching portion between the basis that the transmitting end uses to generate the message for the user authentication from the generated message for the user authentication and the basis that the receiving end uses to measure the message for the user authentication transmitted by the transmitting end; and
receiving, from the receiving end, a user authentication measurement value related to the matching portion between the basis that the transmitting end uses to generate the message for the user authentication and the basis that the receiving end uses to measure the message for the user authentication transmitted by the transmitting end, among measurement values for the entire transmitted message for the user authentication of the receiving end,
wherein a success or a failure of the user authentication is determined based on the user authentication error rate calculated based on a difference between (i) a value of the user authentication information and (ii) the user authentication measurement value.

5. The method of claim 1, wherein performing the QBER estimation comprises transmitting, to the receiving end, the remaining checking sequence excluding the portion of the checking sequence determined from each of the at least one data block.

6. The method of claim 5, wherein performing the QBER estimation further comprises:

transmitting, to the receiving end, information for a basis used to generate the remaining checking sequence; and
receiving, from the receiving end, measurement basis information for a basis that the receiving end uses to measure the transmitted remaining checking sequence.

7. The method of claim 6, wherein performing the QBER estimation further comprises:

determining, based on the measurement basis information, checking sequence information related to a matching portion between the basis that the transmitting end uses to generate the remaining checking sequence from the generated remaining checking sequence and the basis that the receiving end uses to measure the remaining checking sequence transmitted by the transmitting end; and
receiving, from the receiving end, a checking sequence measurement value related to the matching portion between the basis that the transmitting end uses to generate the remaining checking sequence and the basis that the receiving end uses to measure the remaining checking sequence transmitted by the transmitting end, among measurement values for the entire transmitted remaining checking sequence of the receiving end.

8. The method of claim 1, wherein the at least one key generated based on the preshared key is constructed by repeatedly concatenating the preshared key until a sum of (i) a length of the preshared key and (ii) a length of the at least one key generated based on the preshared key is equal to a length of the information sequence including the at least one data block.

9. The method of claim 1, wherein the at least one key generated based on the preshared key is constructed by repeatedly concatenating the preshared key until a sum of (i) a length of the preshared key and (ii) a length of the at least one key generated based on the preshared key is equal to a length of the information sequence including the at least one data block, and

wherein the repeatedly concatenated preshared key is shifted to the left or right each time the preshared key is repeatedly concatenated.

10. The method of claim 1, wherein each of the preshared key and the at least one key generated based on the preshared key corresponds one-to-one to the at least one data block.

11. A transmitting end performing a user authentication in a quantum communication system, the transmitting end comprising:

a transmitter transmitting a radio signal;
a receiver receiving the radio signal;
at least one processor; and
at least one computer memory operably connectable to the at least one processor and storing instructions performing operations based on being executed by the at least one processor,
wherein the operations comprise:

performing, with a receiving end, a random access procedure for establishing a connection related to a classical channel related to a quantum channel for the user authentication,
wherein the random access procedure includes:

transmitting a random access preamble to the receiving end;
receiving a random access response from the receiving end;
transmitting a connection request message to the receiving end based on the random access response; and
receiving a contention resolution message from the receiving end;

transmitting, to the receiving end, an information sequence including at least one data block on the quantum channel,
wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block,
wherein the preshared key is used to select a location of a sequence to be used for the user authentication among sequences included in a specific data block related to the user authentication among the at least one data block;
performing the user authentication with the receiving end based on a portion of the checking sequence determined from each of the at least one data block; and
performing the QBER estimation with the receiving end based on i) a result of the user authentication and (ii) a remaining checking sequence excluding the portion of the checking sequence determined from each of the at least one data block,
wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

12. A method of performing, by a receiving end, a user authentication in a quantum communication system, the method comprising:

performing, with a transmitting end, a random access procedure for establishing a connection related to a classical channel related to a quantum channel for the user authentication,
wherein the random access procedure includes:

receiving a random access preamble from the transmitting end;
transmitting a random access response to the transmitting end;
receiving a connection request message from the transmitting end based on the random access response;

and

transmitting a contention resolution message to the transmitting end;

receiving, from the transmitting end, an information sequence including at least one data block on the quantum channel,

wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block,

wherein the preshared key is used to select a location of a sequence to be used for the user authentication among sequences included in a specific data block related to the user authentication among the at least one data block;

performing the user authentication with the transmitting end based on a portion of the checking sequence determined from each of the at least one data block; and

performing the QBER estimation with the receiving end based on i) a result of the user authentication and (ii) a remaining checking sequence excluding the portion of the checking sequence determined from each of the at least one data block,

wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

13. A receiving end performing a user authentication in a quantum communication system, the receiving end comprising:

a transmitter transmitting a radio signal;

a receiver receiving the radio signal;

at least one processor; and

at least one computer memory operably connectable to the at least one processor and storing instructions performing operations based on being executed by the at least one processor,

wherein the operations comprise:

performing, with a transmitting end, a random access procedure for establishing a connection related to a classical channel related to a quantum channel for the user authentication,

wherein the random access procedure includes:

receiving a random access preamble from the transmitting end;

transmitting a random access response to the transmitting end;

receiving a connection request message from the transmitting end based on the random access response; and

transmitting a contention resolution message to the transmitting end;

receiving, from the transmitting end, an information sequence including at least one data block on the quantum channel,

wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block,

wherein the preshared key is used to select a location of a sequence to be used for the user authentication among sequences included in a specific data block related to the user authentication among the at least one data block;

performing the user authentication with the transmitting end based on a portion of the checking sequence determined from each of the at least one data block; and

performing the QBER estimation with the receiving end based on i) a result of the user authentication and (ii) a remaining checking sequence excluding the portion of the checking sequence determined from each of the at least one data block,

wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

**14.** A non-transitory computer readable medium (CRM) storing one or more instructions,
wherein one or more instructions executable by one or more processors allow a transmitting end to:

perform, with a receiving end, a random access procedure for establishing a connection related to a classical channel related to a quantum channel for the user authentication,
wherein the random access procedure includes:

transmitting a random access preamble to the receiving end;
receiving a random access response from the receiving end;
transmitting a connection request message to the receiving end based on the random access response; and
receiving a contention resolution message from the receiving end;

transmit, to the receiving end, an information sequence including at least one data block on the quantum channel,
wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block,
wherein the preshared key is used to select a location of a sequence to be used for the user authentication among sequences included in a specific data block related to the user authentication among the at least one data block;
perform the user authentication with the receiving end based on a portion of the checking sequence determined from each of the at least one data block; and
perform the QBER estimation with the receiving end based on i) a result of the user authentication and (ii) a remaining checking sequence excluding the portion of the checking sequence determined from each of the at least one data block,
wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

**15.** A device including one or more memories and one or more processors operably connected to the one or more memories,
wherein the one or more processors allow the device to:

perform, with a receiving end, a random access procedure for establishing a connection related to a classical channel related to a quantum channel for the user authentication,
wherein the random access procedure includes:

transmitting a random access preamble to the receiving end;
receiving a random access response from the receiving end;
transmitting a connection request message to the receiving end based on the random access response; and
receiving a contention resolution message from the receiving end;

transmit, to the receiving end, an information sequence including at least one data block on the quantum channel,
wherein based on (i) a preshared key between the transmitting end and the receiving end and (ii) at least one key generated based on the preshared key, a checking sequence for a quantum bit error rate (QBER) estimation for determining whether there is an eavesdropping on the quantum channel is determined from each of the at least one data block,
wherein the preshared key is used to select a location of a sequence to be used for the user authentication among sequences included in a specific data block related to the user authentication among the at least one data block;
perform the user authentication with the receiving end based on a portion of the checking sequence determined from each of the at least one data block; and
perform the QBER estimation with the receiving end based on i) a result of the user authentication and (ii) a remaining checking sequence excluding the portion of the checking sequence determined from each of the at least one data block,
wherein (i) a user authentication error rate calculated based on the portion of the checking sequence used for the user authentication and determined from each of the at least one data block and (ii) a QBER estimation error rate calculated based on the remaining checking sequence excluding the portion of the checking sequence determined from each of the at least one data block are used for the QBER estimation.

【FIG. 1】

【FIG. 2】

【FIG. 3】

【FIG. 4】

Device(400)

Communication unit(410)
(e.g., 5G communication unit)

Communication circuit(412)
(e.g., processor(s),memory(s))

Transceiver(s) (414)
(e.g., RF unit(s),antenna(s))

Control unit(420)
(e.g., processor(s))

Memory unit(430)
(e.g., RAM, storage)

Additional components(440)
(e.g., power unit/battery,
I/O unit,driving unit,
computing unit)

【FIG. 5】

【FIG. 6】

- DL/UL ACK/NACK
- UE CQI/PMI RI REPORT
  USING PUSCH AND PUCCH

【FIG. 7】

【FIG. 8】

[ FIG. 9 ]

【FIG. 10】

1010                         1020

Alice — Quantum channel — Bob

Authenticated classical channel

【FIG. 11】

1110                         1120

Alice — Quantum channel — Bob

Authenticated classical channel

Eve —1130

【FIG. 12】

1210      1203              1204      1220

Alice             $M \| MAC_k(M)$          Bob

Plaintext M

1201

1200

Key

MAC Algorithm

1205

$MAC_k(M)$

Plaintext M

$MAC_k(M)$

Split

Plaintext M

1202

1200

Key

MAC Algorithm

$MAC_k(M)$ → Compare

【FIG. 13】

【FIG. 14】

Message,
QBER Estimation Information

1410                                    1420

Alice ——— Quantum Channel ——— Bob
      ——— Classical Channel ———
                              Authentication Message

Authentication Message                  Authentication Message

MAC Algorithm ←—Key                     MAC Algorithm ←—Key

MAC  ←———  Error Rate Estimation  ———→  MAC

1430

【FIG. 15】

1510

Alice

1520

Bob

| Message | Quantum Channel | Message |

Preshared key

1531

Preshared key

1532

【FIG. 16】

1610

Alice(or Bob)

1620

Eve

| Message | Quantum Channel | Message |

Preshared key

1631

Random selection

1632

【FIG. 17】

1710

Preshared key | 1 | 0 | 1 | ... | ... | ... | ... | ... | 0 | 1 |

Authentication Message

1720

Authentication Code | | ... | ... | ... | |

1730

【FIG. 18】

1810

Alice

1820

Bob

| 1 | 0 | 1 | 1 | 0 | 1 |          | 1 | 0 | 1 | 0 | 0 | 1 |     1. Generate authentication code

| + | x | + | + | x | x | ←Classical Channel→ | x | x | + | + | x | + |     2. Exchange basis information

| | 0 | 1 | 1 | 0 |          | 0 | 1 | 0 | 0 |     3. Remove basis mismatch value

| 0 | 1 | 1 | 0 | ←Classical Channel→ | 0 | 1 | 0 | 0 |     4. Estimate error rate through measurement value exchange

【FIG. 19】

Alice——1910                                          Bob——1920

S19010
Preshare preshared key

S19020
Generate quantum state information
(preshare location of
authentication message)

Transmit on
quantum channel

S19030
Receive quantum state
information (preshare location
of authentication message)

S19040
Select authentication message
among quantum state information

S19040
Select authentication message
among quantum state information

S19050
Generate authentication
code using preshared key

S19050
Generate authentication
code using preshared key

Exchange basis
information on
classical channel

S19060
Perform shifting process
through basis exchange

S19060
Perform shifting process
through basis exchange

S19080
Estimate error rate using final
authentication codes of
transmitter and receiver

Transmit measurement
value on
classical channel

S19070
Store final authentication
code

S19090
QBER threshold <
Error rate

Yes

S19101
Authentication
failure

No

S19103
Authentication
success

【FIG. 20】

S2020

Authentication message

$+$

QBER checking sequence

S2010

Authentication message

2030 —

QBER checking sequence

【FIG. 21】

2111

2113

Quantum state sequence
transmitted on
quantum channel

2121 —

— 2123

Authentication message

QBER checking sequence

[FIG. 22]

Alice—2210 ─S22010
Bob—2220 ─S22010

Preshare preshared key
Preshare preshared key

─S22020
Generate quantum state information
(preshare location of
authentication message)

Transmit on
quantum channel

─S22030
Receive quantum state
information (preshare location
of authentication message)

─S22040
Select authentication message
among quantum state information

─S22040
Select authentication message
among quantum state information

─S22050
Generate authentication
code using preshared key

─S22050
Generate authentication
code using preshared key

─S22060
Perform shifting process
through basis exchange

Exchange basis
information on
classical channel

─S22060
Perform shifting process
through basis exchange

─S22080
Estimate error rate using final
authentication codes of
transmitter and receiver

Transmit measurement
value on
classical channel

─S22070
Store final authentication
code

─S22090
QBER threshold <
Error rate

Yes ──→ ─S22101
Authentication failure

No ─S22103
Authentication success

─S22100
Randomly select QBER
checking sequence

Transmit measurement
location on
classical channel

─S22100
Randomly select QBER
checking sequence

─S22110
Perform shifting process
through basis exchange

Exchange basis
information on
classical channel

─S22110
Perform shifting process
through basis exchange

─S22140
Estimate error rate through
comparison of checking sequences
of transmitter and receiver

Transmit measurement
value on
classical channel

─S22130
Store measurement value

─S22150
QBER threshold <
Error rate

Yes ──→ ─S22163
There is an eavesdropper

No ─S22161
No eavesdropper

【FIG. 23】

2310

Alice

2320

Bob

| $B_1$ | $B_2$ | $B_3$ | ... | ... | ... | ... | ... | ... | $B_k$ |

Quantum Channel →

| $B_1$ | $B_2$ | $B_3$ | ... | ... | ... | ... | ... | ... | $B_k$ |

【FIG. 24】

S2410

| 1 | 0 | 0 | 0 | 1 | 1 | 0 | 1 | 0 | 1 |

⇓

| ↑ | → | ↗ | → | ↘ | ↑ | → | ↘ | → | ↑ |

2410

Alice

2420

Bob

Data sequence (Message, QBER)

| $B_1$ | $B_2$ | $B_3$ | ... | ... | ... | ... | ... | ... | $B_k$ |

Quantum Channel →

| $B_1$ | $B_2$ | $B_3$ | ... | ... | ... | ... | ... | ... | $B_k$ |

Preshared key

| $P_1$ | $P_2$ | $P_3$ | ... | ... | ... | ... | ... | $P_k$ |

| $P_1$ | $P_2$ | $P_3$ | ... | ... | ... | ... | ... | $P_k$ |

| 0 | 1 | 1 | 0 | 1 | 0 | 0 | 0 | 1 | 1 |

S2420

【FIG. 25】

S2510

✓Block repetition
 chain

$P_1$ $P_1$ $P_1$ $\cdots$ $P_1$

S2520

✓R(L) shift

$P_1$ $P_2$ $P_3$ $\cdots$ $P_k$

S2530

✓Cipher block chain

$P_1$: preshared key, $P_k$=Mod2_sum($P_{k-1}$,$B_{k-1}$)

**[ FIG. 26 ]**

Red Area: Portion used as authentication sequence and QBER checking sequence

Purple Area: Portion used as QBER checking sequence

2611

$B_1$ $B_2$ $B_3$ ... ... ... ... ... ... $B_k$

Quantum Channel

2613

$B_1$ $B_2$ $B_3$ ... ... ... ... ... ... $B_k$

QBER estimation sequence

2621

2623

Classical channel

+ x ... + x x

2631

2633

Classical channel

1. Select authentication sequence among QBER estimation sequences

2. Basis exchange (random basis selection)

3. Remove basis mismatch value (50% removed)

4. Estimate error rate through measurement value exchange

5. Determine whether authentication passes or fails depending on whether error rate estimation result exceeds QBER threshold

EP 4 633 064 A1

【FIG. 27】

Red Area: Portion used as authentication sequence and QBER checking sequence

Purple Area: Portion used as QBER checking sequence

2710
2711
Alice

2720
2713
Bob

$B_1$ $B_2$ $B_3$ ··· ··· ··· ··· ··· ··· $B_k$ → Quantum Channel → $B_1$ $B_2$ $B_3$ ··· ··· ··· ··· ··· ··· $B_k$

QBER estimation sequence

2721
2723
1. Select QBER checking sequence

+ x ··· + x x ← Classical channel → + x ··· + x x
2. Basis exchange

2731
2733
3. Remove basis mismatch value

··· ← Classical channel → ··· e
4. Estimate error rate

2743

5. Determine whether QBER passes

$$\frac{\text{Number of errors of authentication sequence (red area)} + \text{Number of errors of sequence used only for QBER checking (purple area)}}{\text{Number of QBER checking sequences}} \leq \text{QBER threshold}$$

EP 4 633 064 A1

【FIG. 28】

- - - - Quantum channel
———— Classical(Public) channel

2810 — Alice

2820 — Bob

**1. Process of generating and measuring information to be used for secret key and QBER estimation**

Generate secret key/random number for QBER checking —S28010

Transmission after coding secret key/random number for QBER checking into quantum state —S28020

Transmit secret key and QBER checking information into quantum state

Measurement using random basis —S28030

**2. User authentication process**

Preshare and update symmetric key to be used for authentication —S28040

Select authentication message among quantum state information —S28050

Generate authentication code using preshared key —S28060

Perform shifting process through basis exchange —S28070

Exchange basis information on classical channel

Estimate error rate using final authentication codes of transmitter and receiver —S28090

Transmit measurement value on classical channel

QBER threshold < Error rate —S28100

Yes → Authentication failure —S28113 → Restart after quantum channel reconfiguration —S28115

No —S28111 → Authentication success

Preshare and update symmetric key to be used for authentication —S28040

Select authentication message among quantum state information —S28050

Generate authentication code using preshared key —S28060

Perform shifting process through basis exchange —S28070

Store final authentication code —S28080

**3. QBER estimation process**

Transmit selected location information on classical channel if random selection method is used

Select QBER checking sequence (using preshared key or random selection method) —S28120

Perform shifting process through basis exchange —S28130

Exchange basis information on classical channel

Estimate error rate through comparison of checking sequences of transmitter and receiver —S28150

Transmit measurement value on classical channel

QBER threshold < Error rate —S28160

Yes → There is an eavesdropper —S28173 → Restart after quantum channel reconfiguration —S28175

No —S28171 → No eavesdropper

Select QBER checking sequence (using preshared key or random selection method) —S28120

Perform shifting process through basis exchange —S28130

Store measurement value —S28140

**4. Post-processing process**

Transmit additional information for error correction

Error reconciliation —S28180

Privacy amplification —S28190

Error reconciliation —S28180

Privacy amplification —S28190

**5. Process of updating authentication key and generating secret key**

Transmit portion of final key to use it as authentication symmetric key after generating final key —S28200

Use remaining final key as secret symmetric key —S28210

Transmit portion of final key to use it as authentication symmetric key after generating final key —S28200

Use remaining final key as secret symmetric key —S28210

【FIG. 29】

S29030 —  2910 — Alice                                          2920 — Bob

S29010 — Generate initial information (information of random state)

Store most of initial information in quantum memory

S29040 —

Use remaining initial information for QBER estimation and store measurement and result using random basis

Transmission of quantum state corresponding to initial information

S29020 — Transmission after coding initial information into quantum state

Process of generating and measuring initial information

S29050 — Preshare and update symmetric key to be used for authentication

S29050 — Preshare and update symmetric key to be used for authentication

S29060 — Select location of QBER checking sequence

S29060 — Select location of QBER checking sequence

S29070 — Select authentication message to be used for user authentication among QBER checking sequence

S29070 — Select authentication message to be used for user authentication among QBER checking sequence

S29080 — Perform shifting process through basis exchange

Basis exchange

S29080 — Perform shifting process through basis exchange

S29090 — Store measurement value of authentication information

Measurement value transmission

S29100 — Estimate error rate

User authentication process

S29113 — Authentication failed

Yes

S29110 — QBER threshold < Error rate

S29111 — No

Authentication passed

Transmit selected location information on classical channel if random selection method is used

S29130 — Select QBER checking sequence (using preshared key or random selection method)

S29130 — Select QBER checking sequence (using preshared key or random selection method)

S29140 — Perform shifting process through basis exchange

Transmit measurement value on classical channel

S29140 — Perform shifting process through basis exchange

S29160 — Decryption (=XOR) of measurement value of receiver using preshared key value (reception value, preshared key)

decrypted on classical channel

transmitted on QBER checking sequence

S29160 — Decryption (=XOR) of measurement value of receiver using preshared key value (reception value, preshared key)

QBER estimation process

S29170 — Estimate error rate through comparison of checking sequences of transmitter and receiver

S29195 — Restart after quantum channel reconfiguration

S29193 — There is an eavesdropper

Yes

S29180 — QBER threshold < Error rate

S29191 — No

No eavesdropper

Replace QBER checking information with new preshared key for authentication — S29211

Yes

S29200 — Authentication and QBER pass?

No

S29213 — Change to another communication line

Replace preshared key for backup with new preshared key for authentication when changing route — S29215

S29217 — Restart from the beginning after stopping process

S29211 — Replace QBER checking information with new preshared key for authentication

S29215 — Replace preshared key for backup with new preshared key for authentication when changing route

Preshared key update process

S29220 — Code message information into initial quantum state

Quantum state transmission

S29230 — Store measurement and result

S29217 — Restart from the beginning after stopping process

- - - - Quantum channel
——— Classical(Public) channel

Message transmission and measurement

S29240 — Message recovery

【FIG. 30】

Alice

Preshared key | 1 0 1 1 0 0 1 1 0 0 0 1 |  — Quantum Channel → | 1 0 1 1 0 0 1 1 0 0 0 1 | Preshared key  Bob

| Message information for quantum state authentication |    | Message information for quantum state authentication |

S3010

Authentication message compression

S3010

Authentication message compression

1. Select authentication message among quantum state information using preshared key

half of Preshared key

| 1 0 1 1 0 0 |    | 1 0 1 1 0 0 |

S3020— | + | x | + | + | x | x |    S3020— | + | x | + | + | x | x |

2. Basis selection using preshared key

S3030— Authentication Code    Authentication Code
Classical Channel →

S3030

3. Estimate error rate through authentication code exchange

4. Determine whether authentication passes or fails depending on whether error rate estimation result exceeds QBER threshold

EP 4 633 064 A1

【FIG. 31】

【FIG. 32】

【FIG. 33】

[FIG. 34]

```
                    ( Start )
                        |
                        v
+-------------------------------------------------+
| Perform, with receiving end, random access      |
| procedure for establishing connection related   |---- S3410
| to classical channel related to quantum channel |
| for user authentication                         |
+-------------------------------------------------+
                        |
                        v
+-------------------------------------------------+
| Transmit information sequence including at least|
| one data block to receiving end on quantum      |---- S3420
| channel                                         |
+-------------------------------------------------+
                        |
                        v
+-------------------------------------------------+
| Perform user authentication with receiving end  |
| based on portion of checking sequence determined|---- S3430
| from each of at least one data block            |
+-------------------------------------------------+
                        |
                        v
+-------------------------------------------------+
| Perform QBER estimation with receiving end based|
| on (i) result of user authentication and (ii)   |
| remaining checking sequence excluding portion of|---- S3440
| checking sequence determined from each of at    |
| least one data block                            |
+-------------------------------------------------+
                        |
                        v
                    ( End )
```

[FIG. 35]

```
                    ╭─────────────╮
                    │    Start    │
                    ╰──────┬──────╯
                           │
                           ▼
    ┌──────────────────────────────────────────────────┐
    │ Perform, with transmitting end, random access     │
    │ procedure for establishing connection related to  │───S3510
    │ classical channel related to quantum channel for  │
    │ user authentication                               │
    └──────────────────────┬───────────────────────────┘
                           │
                           ▼
    ┌──────────────────────────────────────────────────┐
    │ Receive information sequence including at least   │
    │ one data block from transmitting end on quantum   │───S3520
    │ channel                                           │
    └──────────────────────┬───────────────────────────┘
                           │
                           ▼
    ┌──────────────────────────────────────────────────┐
    │ Perform user authentication with transmitting     │
    │ end based on portion of checking sequence         │───S3530
    │ determined from each of at least one data block   │
    └──────────────────────┬───────────────────────────┘
                           │
                           ▼
    ┌──────────────────────────────────────────────────┐
    │ Perform QBER estimation with transmitting end     │
    │ based on (i) result of user authentication and    │
    │ (ii) remaining checking sequence excluding        │───S3540
    │ portion of checking sequence determined from each │
    │ of at least one data block                        │
    └──────────────────────┬───────────────────────────┘
                           │
                           ▼
                    ╭─────────────╮
                    │     End     │
                    ╰─────────────╯
```

## INTERNATIONAL SEARCH REPORT

| International application No. |
| --- |
| **PCT/KR2022/020038** |

### A. CLASSIFICATION OF SUBJECT MATTER

**H04B 10/85**(2013.01)i; **H04B 10/70**(2013.01)i; **H04B 10/079**(2013.01)i; **H04W 12/04**(2009.01)i; **H04W 12/06**(2009.01)i

According to International Patent Classification (IPC) or to both national classification and IPC

### B. FIELDS SEARCHED

Minimum documentation searched (classification system followed by classification symbols)

H04B 10/85(2013.01); G09C 1/04(2006.01); H03M 13/01(2006.01); H03M 13/11(2006.01); H04L 9/06(2006.01); H04L 9/08(2006.01); H04L 9/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양자 통신 시스템(quantum communication system), 사용자 인증(user authentication), 도청(wiretapping), 체킹 시퀀스(checking sequence), QBER(quantum bit error rate)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022-045378 A1 (LG ELECTRONICS INC.) 03 March 2022 (2022-03-03)<br>See paragraphs [0354]-[0356], [0388]-[0390] and [0419]; claims 1 and 4; and figures 35, 40 and 44. | 1-15 |
| A | KR 10-1479112 B1 (SK TELECOM CO., LTD.) 07 January 2015 (2015-01-07)<br>See claims 1 and 5. | 1-15 |
| A | 박주윤 등. 양자직접통신을 위한 파라미터 최적화 방법. 2022년도 한국통신학회 동계종합학술발표회. 09 February 2022, pp. 128-129 (PARK, Jooyoun et al. Parameter optimization method for quantum secure direct communication. KICS Winter Conference 2022.)<br>See section II. | 1-15 |
| A | WO 2015-060518 A1 (SK TELECOM CO., LTD.) 30 April 2015 (2015-04-30)<br>See paragraphs [0067]-[0072]; claim 1; and figures 1-2. | 1-15 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 August 2023** | **22 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/020038** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2011042 B1 (KOREA INSTITUTE OF SCIENCE AND TECHNOLOGY) 14 August 2019 (2019-08-14)<br>See paragraphs [0061]-[0063]; claim 1; and figures 1-3. | 1-15 |

Form PCT/ISA/210 (second sheet) (July 2022)

**INTERNATIONAL SEARCH REPORT**
Information on patent family members

International application No.

**PCT/KR2022/020038**

| Patent document cited in search report | | | Publication date (day/month/year) | Patent family member(s) | | | Publication date (day/month/year) |
|---|---|---|---|---|---|---|---|
| WO | 2022-045378 | A1 | 03 March 2022 | KR | 10-2023-0054669 | A | 25 April 2023 |
| KR | 10-1479112 | B1 | 07 January 2015 | CN | 104737495 | A | 24 June 2015 |
| | | | | CN | 104737495 | B | 27 March 2018 |
| | | | | KR | 10-2014-0051736 | A | 02 May 2014 |
| | | | | US | 10103881 | B2 | 16 October 2018 |
| | | | | US | 2015-0312035 | A1 | 29 October 2015 |
| | | | | WO | 2014-065497 | A1 | 01 May 2014 |
| WO | 2015-060518 | A1 | 30 April 2015 | CN | 105210314 | A | 30 December 2015 |
| | | | | CN | 105210314 | B | 25 July 2017 |
| | | | | KR | 10-1466204 | B1 | 27 November 2014 |
| | | | | US | 2016-0028542 | A1 | 28 January 2016 |
| | | | | US | 9876639 | B2 | 23 January 2018 |
| KR | 10-2011042 | B1 | 14 August 2019 | US | 10756889 | B2 | 25 August 2020 |
| | | | | US | 2019-0379536 | A1 | 12 December 2019 |

Form PCT/ISA/210 (patent family annex) (July 2022)